# EUROPEAN PATENT SPECIFICATION

(11) **EP 1 544 429 B1**
(45) Date of publication and mention of the grant of the patent: **31.10.2007**
(21) Application number: 03795315.5
(22) Date of filing: 08.09.2003
(51) Int. Cl.: F01N 3/08, F01N 3/20, F01N 3/02, F01N 3/36, B01D 53/94

(54) **EXHAUST GAS CLARIFYING DEVICE FOR INTERNAL COMBUSTION ENGINE**
ABGASREINIGUNGSVORRICHTUNG FÜR VERBRENNUNGSMOTOR
DISPOSITIF DE CLARIFICATION DE GAZ D'ECHAPPEMENT POUR MOTEUR A COMBUSTION INTERNE

(30) Priority: 10.09.2002 JP 2002264157; 21.10.2002 JP 2002305890
(43) Date of publication of application: 22.06.2005
(73) Proprietor: Toyota Jidosha Kabushiki Kaisha, Toyota-shi, Aichi 471-8571 (JP)
(72) Inventor: NAKANO, Yasuaki, Toyota-shi, Aichi 471-8571 (JP); HIROTA, Shinya, Toyota-shi, Aichi 471-8571 (JP); TANAKA, Toshiaki, Toyota-shi, Aichi 471-8571 (JP); MIKAMI, Akira, Toyota-shi, Aichi 471-8571 (JP)
(74) Representative: TBK-Patent
(86) International application number: PCT/JP2003/011453
(87) International publication number: WO 2004/025091

(56) References cited:
- EP-A2- 1 138 890
- WO-A-02/08581
- FR-A- 2 790 789
- JP-A- 7 217 474
- JP-A- 2000 265 828
- JP-A- 2001 300 302
- US-A1- 2001 037 643

## Description

The present invention relates to an exhaust purification device of an internal combustion engine.

As a catalyst for purifying NOₓ contained in exhaust gas when fuel is burned under a lean air-fuel ratio, there is known a catalyst comprised of a carrier made of alumina on the surface of which a layer of a NOₓ absorbent comprised of an alkali metal or alkali earth is formed and on that surface of which a precious metal catalyst such as platinum is carried (for example, see Japanese Patent No. 2600492). In this catalyst, when the air-fuel ratio of the exhaust gas is lean, the NOₓ contained in the exhaust gas is oxidized by the platinum and absorbed in the NOₓ absorbent in the form of a nitrate. Next, when the air-fuel ratio of the exhaust gas is made rich in a short time, the NOₓ which had been absorbed in the NOₓ absorbent during that time is released and reduced. Next, when the air-fuel ratio of the exhaust gas returns to lean, the action of absorption of the NOₓ in the NOₓ absorbent is started.

On the other hand, exhaust gas also contains SOₓ. The NOₓ absorbent absorbs the SOₓ in addition to the NOₓ. In this case, the SOₓ is absorbed in the form of a sulfate. However, this sulfate is harder to break down compared with a nitrate and will not break down if simply making the air-fuel ratio of the exhaust gas rich. Therefore, the NOₓ absorbent gradually increases in the amount of absorption of the SOₓ. Along with this, it can no longer absorb NOₓ. Therefore, when using such a NOₓ absorbent, it is necessary to make it release the SOₓ. In this regard, a sulfate becomes easy to break down when the temperature of the catalyst becomes 600°C or more. If making the air-fuel ratio of the exhaust gas rich at this time, the SOₓ is released from the NOₓ absorbent. Accordingly, if using such a NOₓ absorbent, when making the NOₓ absorbent release the SOₓ, the temperature of the catalyst is maintained at 600°C or more and the air-fuel ratio of the exhaust gas is maintained rich.

Further, if providing a layer of such a NOₓ absorbent, SOₓ is inevitably also absorbed in addition to the NOₓ, so to prevent the SOₓ from being absorbed, it would be sufficient not to provide such a layer of a NOₓ absorbent. Therefore, a catalyst comprised of a carrier made of alumina on which only platinum is carried has been proposed (see Japanese Unexamined Patent Publication (Kokai) No. 11-285624). This publication describes that NOₓ can be purified even when a carrier made of alumina carries only platinum if trapping NOₓ in the catalyst when the air-fuel ratio is lean and switching the air-fuel ratio alternately between lean and rich.

Further, as a catalyst able to purify the NOₓ generated when fuel is burned under a lean air-fuel ratio, a lean NOₓ catalyst comprised of zeolite carrying a transition metal or precious metal is known. This lean NOₓ catalyst has the function of absorbing the HC and NOₓ in the exhaust gas and reducing the NOₓ, but if oxygen is adsorbed, the NOₓ purification performance remarkably drops. Therefore, an internal combustion engine designed to cause the adsorbed oxygen to disassociate by periodically making the air-fuel ratio of the exhaust gas flowing into a lean NOₓ catalyst rich is known (see Japanese Patent No. 3154110). This lean NOₓ catalyst has the feature of being able to reduce NOₓ even when fuel is burned under a lean air-fuel ratio, but has the defects that the exhaust gas has to be supplied with HC for reducing the NOₓ, the heat resistance is low, and a purification rate of only 50 percent or less can be obtained.

The inventors researched catalysts comprised of a carrier formed with a layer of a NOₓ absorbent, but also researched catalysts comprised of a carrier not having a layer of a NOₓ absorbent. As a result, they learned that with a catalyst comprised of carrier not having a layer of a NOₓ absorbent, for example, a catalyst comprised of a carrier made of alumina on which only platinum is carried, if temporarily making the air-fuel ratio rich when burning fuel under a lean air-fuel ratio, a NOₓ purification rate of 90 percent or more can be obtained when the catalyst temperature is a low temperature of 250°C or less.

The inventors engaged in repeated studies on the reasons for this from various angles and as a result reached the following conclusion. That is, generally speaking, platinum inherently has activity at a low temperature. The NOₓ contained in exhaust gas is directly broken down or selectively reduced on the surface of the platinum. Further, a carrier made of alumina has base points on its surface. NOₓ oxidized on the surface of the platinum is adsorbed on the surface of the carrier in the form of NO₂ or is held on the base points on the surface of the carrier in the form of nitrate ions NO₃⁻. When purifying the NOₓ, these various actions are performed simultaneously. As a result, a high purification rate of 90 percent or more is obtained.

However, if exposing a catalyst comprised of a carrier made of alumina on which only platinum is carried to exhaust gas of a lean air-fuel ratio, the NOₓ purification rate gradually falls. This is because the surface of the platinum is covered by oxygen atoms, that is, the surface of the platinum suffers from oxygen poisoning, whereby the direct breakdown of NOₓ or selective reduction of NOₓ on the platinum surface becomes difficult. In practice, if making the air-fuel ratio temporarily rich at this time, the oxygen atoms covering the platinum surface will be consumed for oxidation of the HC or CO, that is, the oxygen poisoning of the platinum surface will be eliminated. When the air-fuel ratio returns to lean next, the direct breakdown of NOₓ or selective reduction of NOₓ will again be performed well.

On the other hand, if the surface of the platinum is covered by oxygen atoms, the NOₓ will become more easily oxidized on the surface of the platinum and therefore the amount of the NOₓ adsorbed or held on the carrier will increase. Regardless of this, the fall in the NOₓ purification rate means that the direct breakdown of NOₓ or selective reduction of NOₓ governs the purification action of NOₓ. Therefore, when carrying only platinum on a carrier made of alumina, preventing the entire surface of the platinum from becoming poisoned by oxygen is the most important issue. Therefore, it becomes necessary to temporarily switch the air-fuel ratio of the exhaust gas from lean to rich before the entire surface of the platinum suffers from oxygen poisoning.

Note that if temporarily switching the air-fuel ratio of the exhaust gas from lean to rich, the NOₓ adsorbed on the carrier or the nitrate ions NO₃⁻ held on the carrier is reduced by the HC and CO. That is, if temporarily switching the air-fuel ratio of the exhaust gas from lean to rich to eliminate the oxygen poisoning of the surface of the platinum, the NOₓ adsorbed or held on the carrier is removed. Therefore, when the air-fuel ratio is returned from rich to lean, the action of adsorption of NOₓ or the action of holding the nitrate ions NO₃⁻ is started.

As explained above, when carrying only platinum on a carrier made of alumina, to secure a high purification rate of NOₓ, it is necessary to prevent the entire surface of the platinum from becoming poisoned by oxygen. However, neither Japanese Unexamined Patent Publication (Kokai) No. 11-285624 nor Japanese Patent No. 3154110 suggests anything regarding this. That is, Japanese Unexamined Patent Publication (Kokai) No. 11-285624 shows the results of studies all predicated on NOₓ being purified based on the action of adsorption of NOₓ. It does not notice that oxygen poisoning of platinum governs the purification rate of NOₓ. Accordingly, only naturally, Japanese Unexamined Patent Publication (Kokai) No. 11-285624 does not suggest anything regarding obtaining a high purification rate even with a low temperature of 250°C or less.

Further, Japanese Patent No. 3154110 covers a lean NOₓ catalyst comprised of zeolite and discloses that the adsorption of oxygen at this lean NOₓ catalyst has an effect on the NOₓ purification rate, but does not suggest anything regarding the fact that oxygen poisoning of the surface of platinum governs the NOₓ purification rate. This zeolite has no base points, so not only does the method of purification of NOₓ differ from when using alumina, but also obtaining a NOₓ purification rate of 50 percent or more is difficult. Therefore, Japanese Patent No. 3154110 cannot serve as a document suggesting obtaining a high purification rate of 90 percent or more at 250°C or less.

WO-A-0208581 discloses an exhaust purification for an internal combustion engine having an exhaust purification catalyst arranged in an exhaust passage. The exhaust purification catalyst comprises a catalyst carrier having base points exhibiting basicity on the carrier surface. The catalyst further carriers a precious metal catalyst dispersed on the carrier surface. Additionally, there is a layer of NOₓ absorbent able to absorb NOₓ formed on the carrier surface.

The object of the present invention is to provide an exhaust purification device being able to allow a high NOx purification rate, even when the temperature of the exhaust purfication device is low, and a low SOₓ releasing temperature.

The object of the present invention is solved with an exhaust purification device according to claim 1.

Further advantageous developments of the present invention are subject-matter of the dependent claims.

The present invention finds that oxygen poisoning of the surface of platinum, that is, the surface of a precious metal, governs the purification rate of NOₓ and provides an exhaust purification device of an internal combustion engine designed to secure a high NOₓ purification rate based on this.

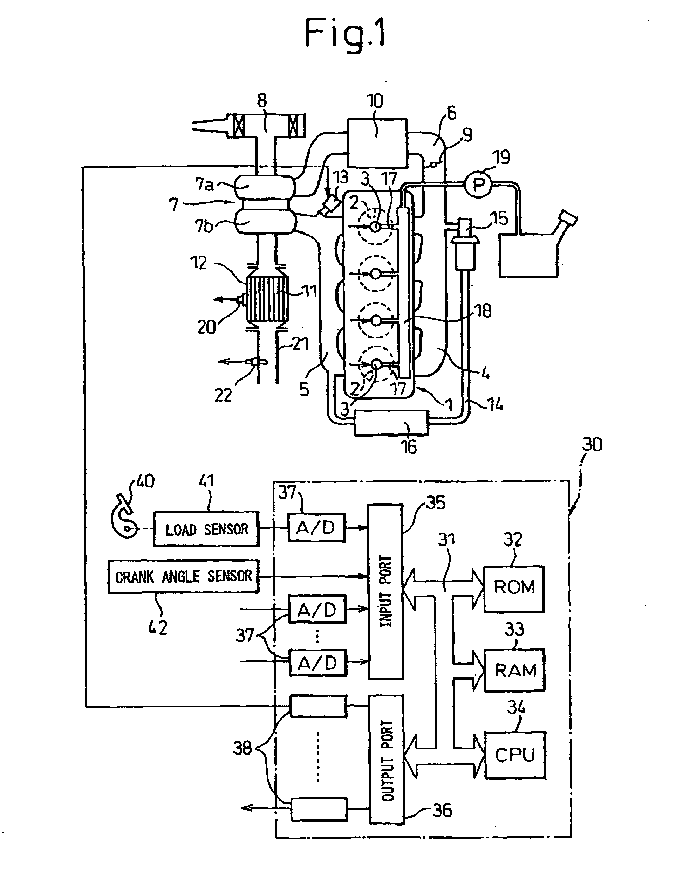

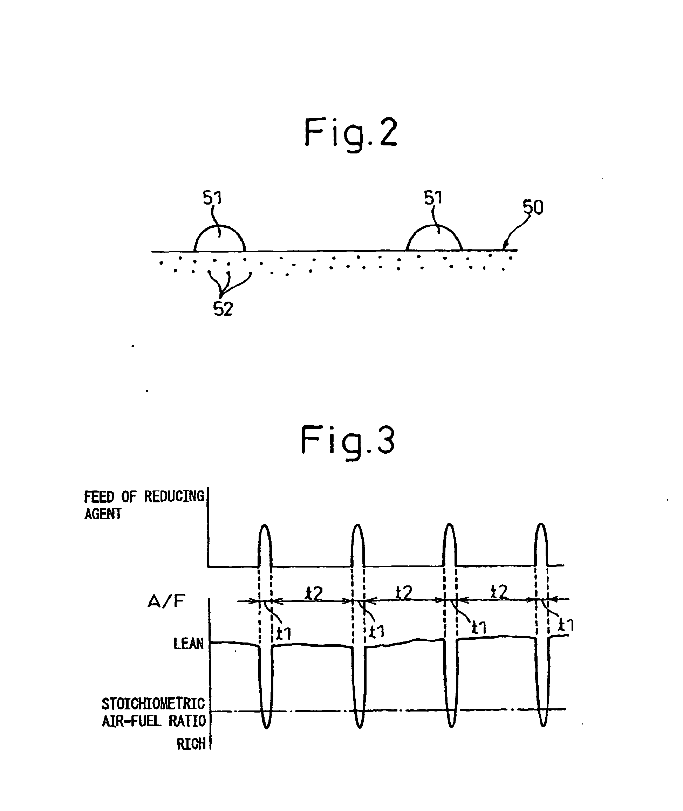

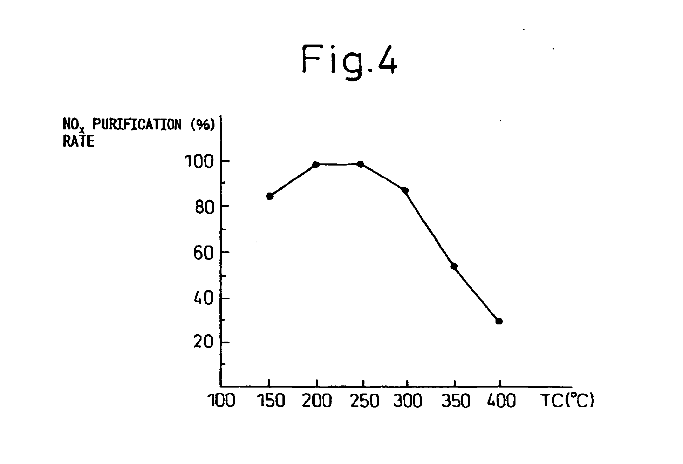

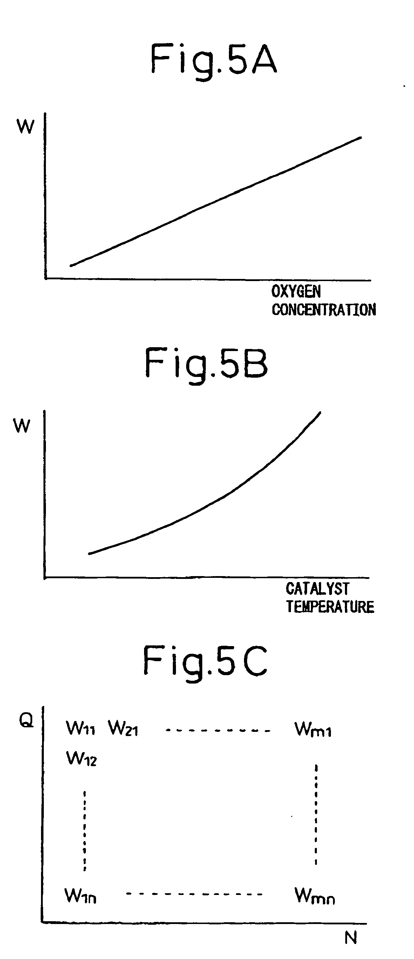

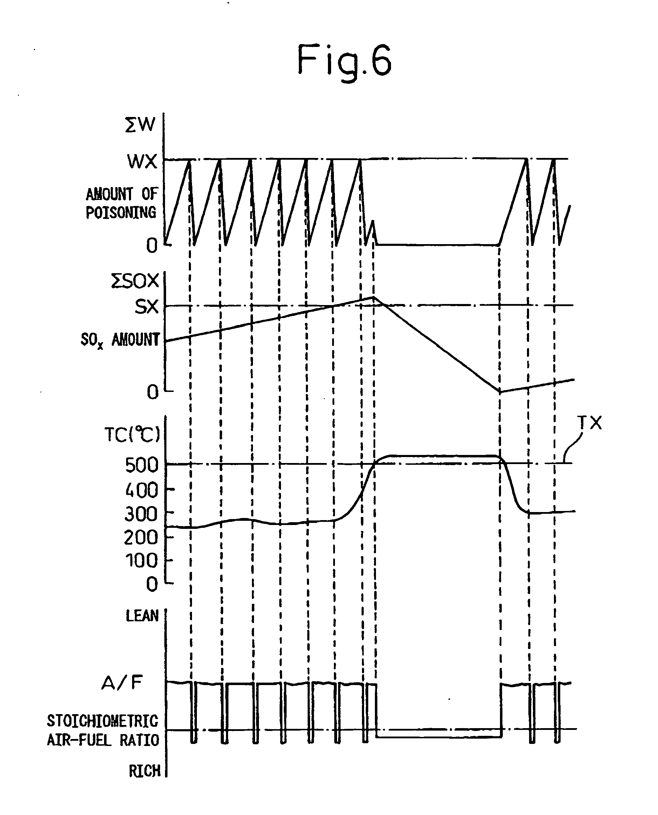

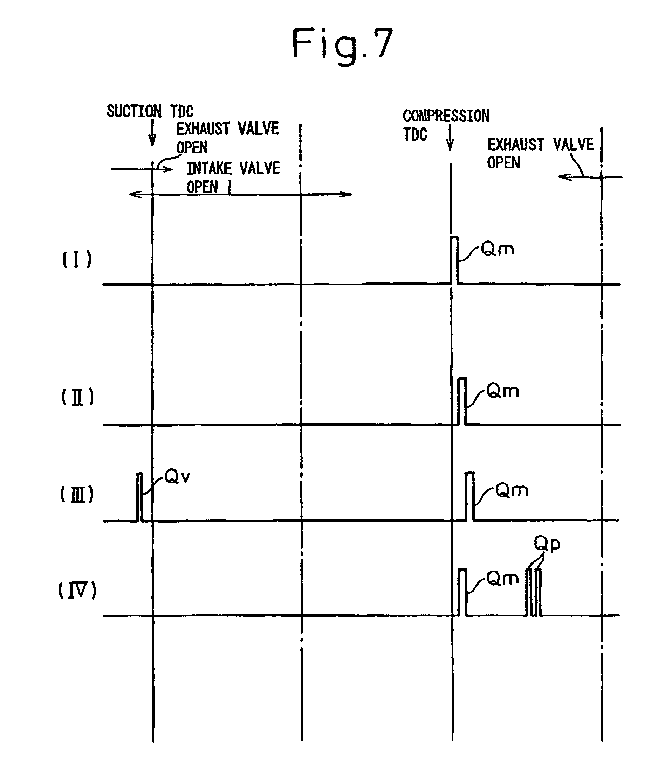

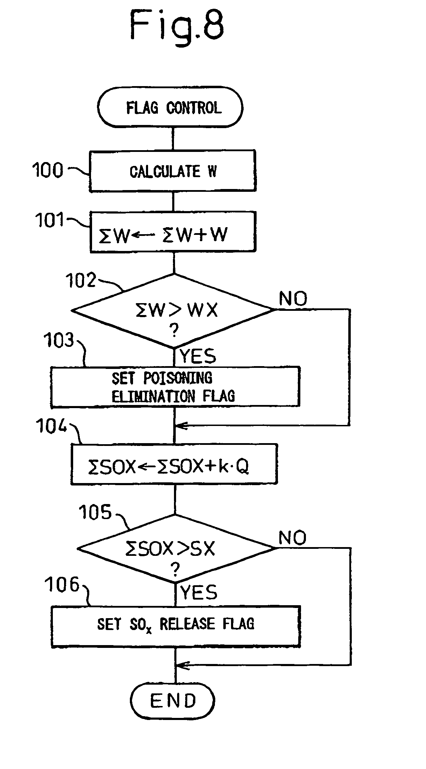

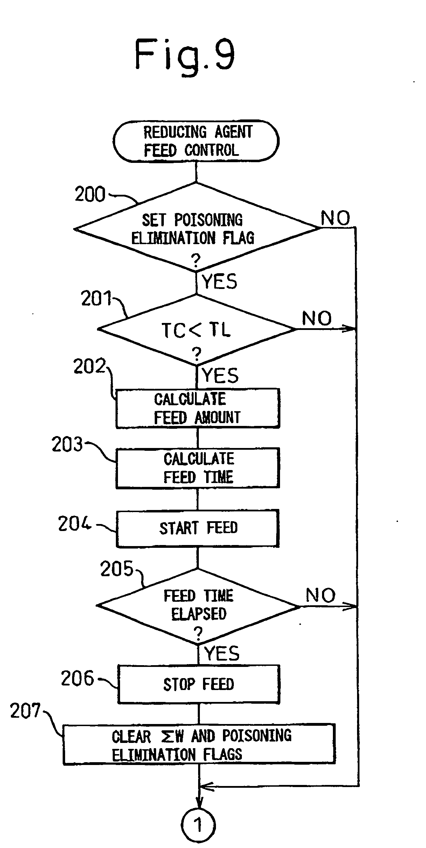

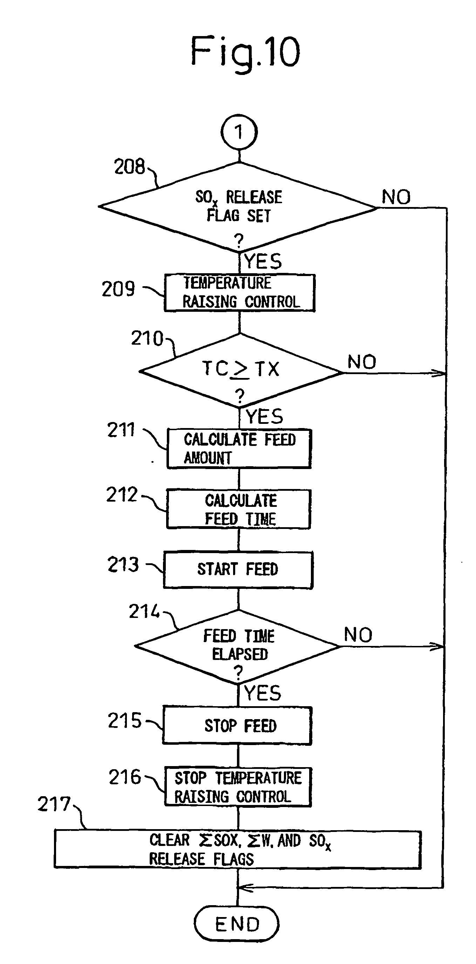

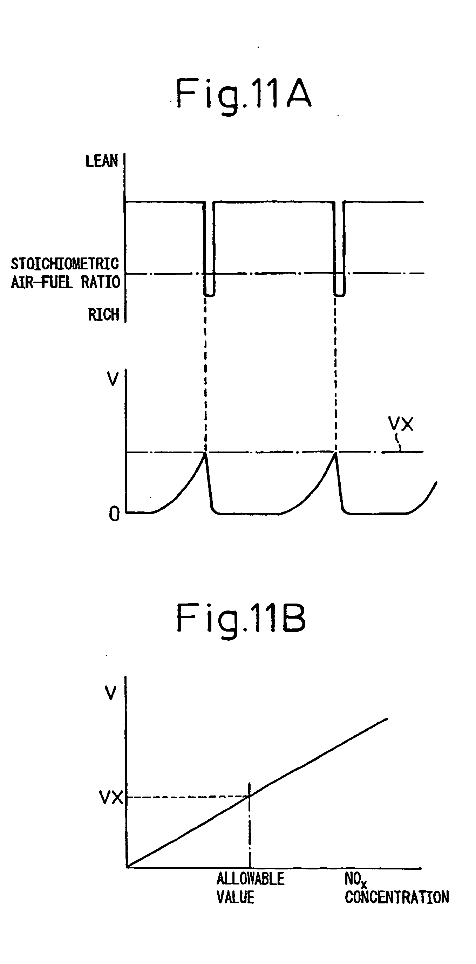

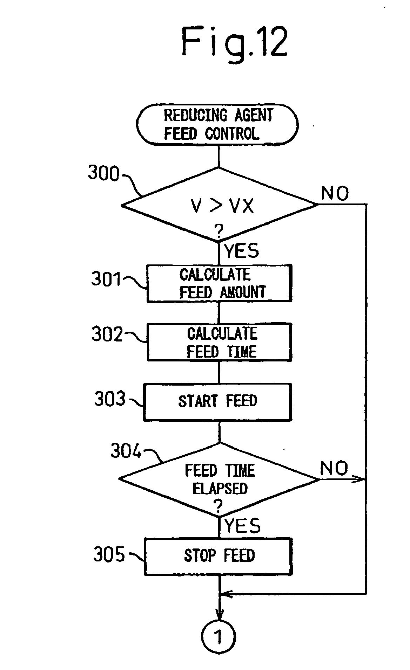

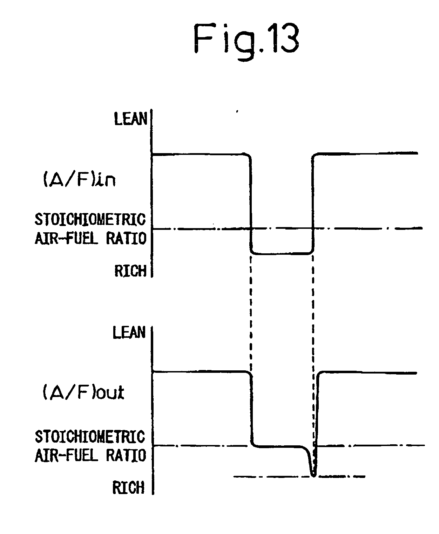

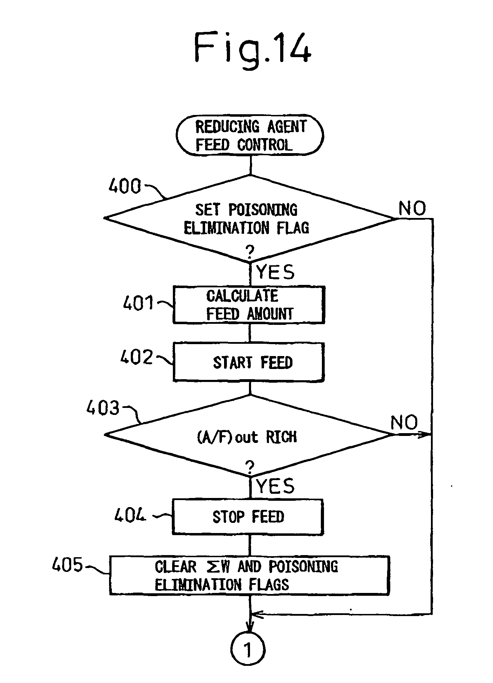

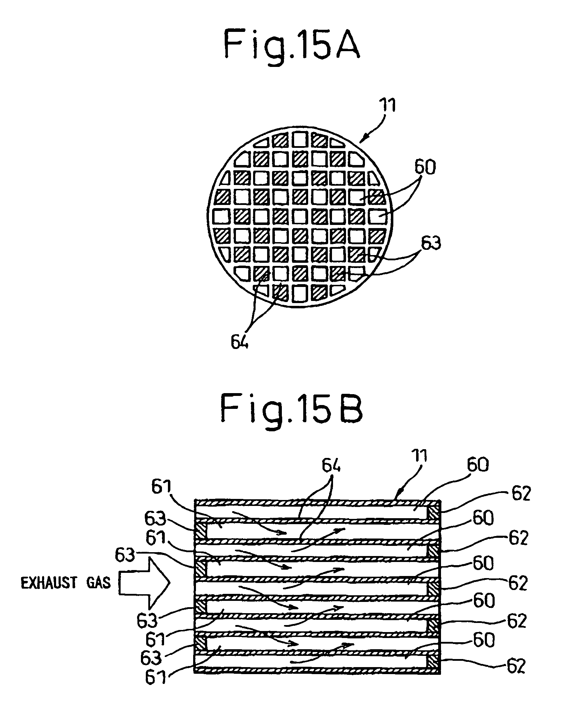

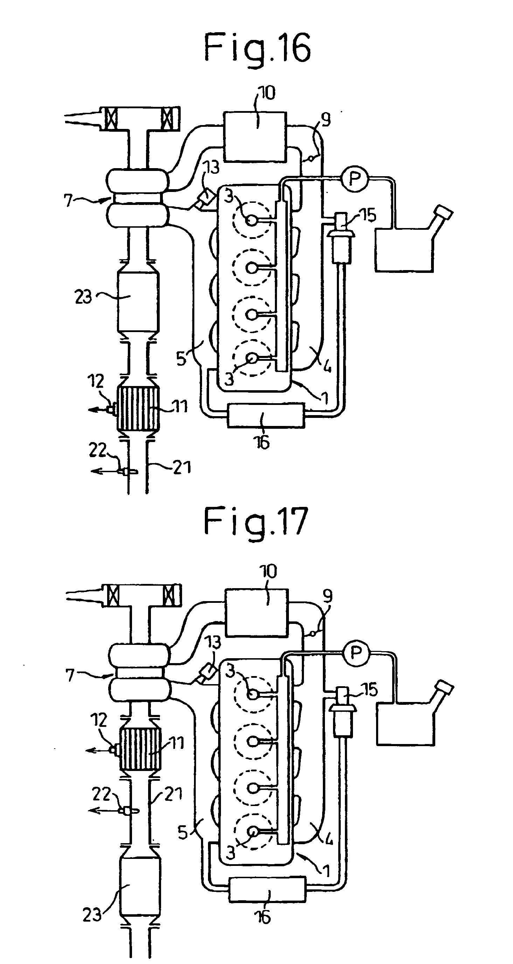

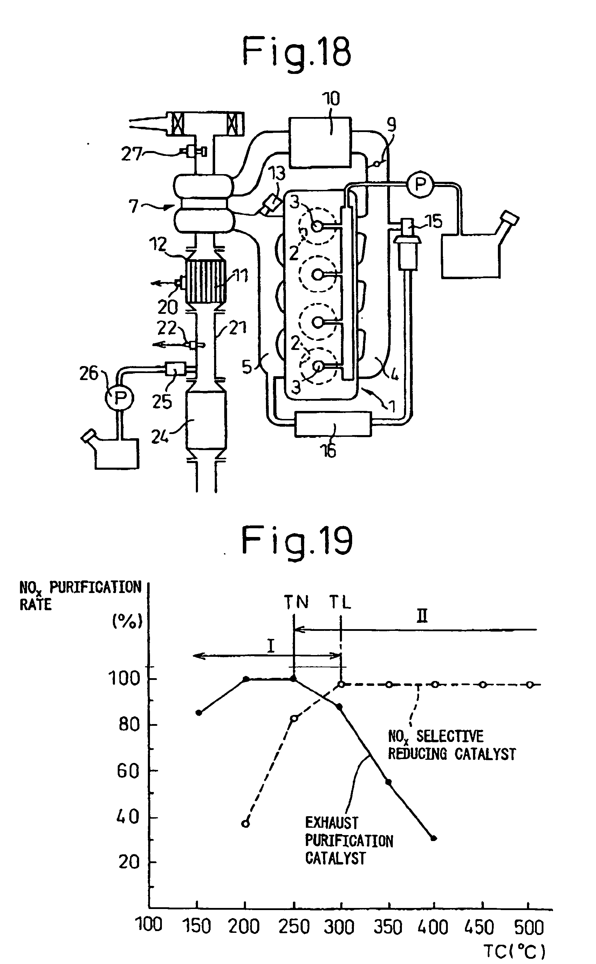

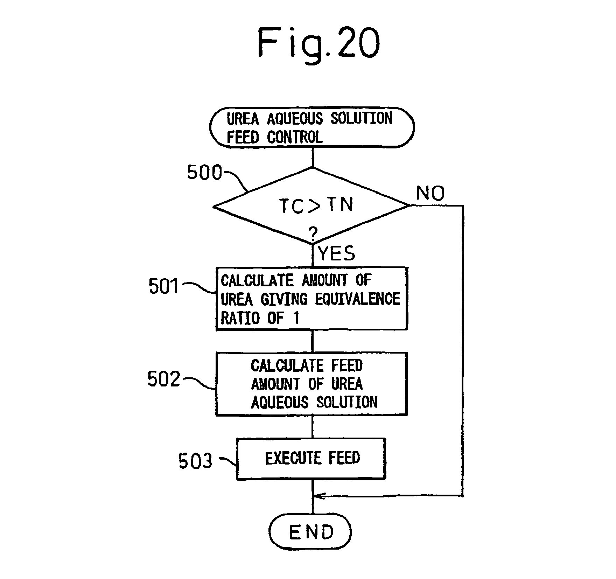

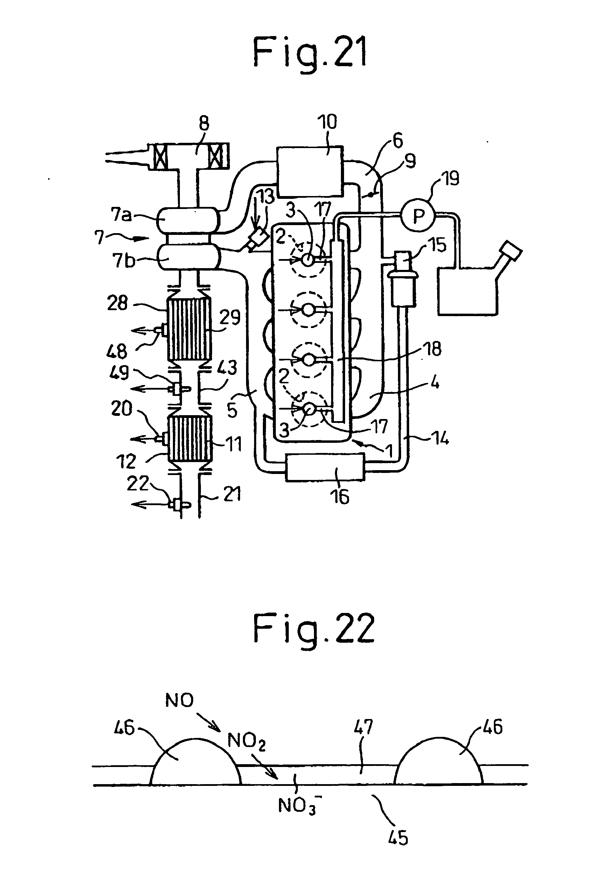

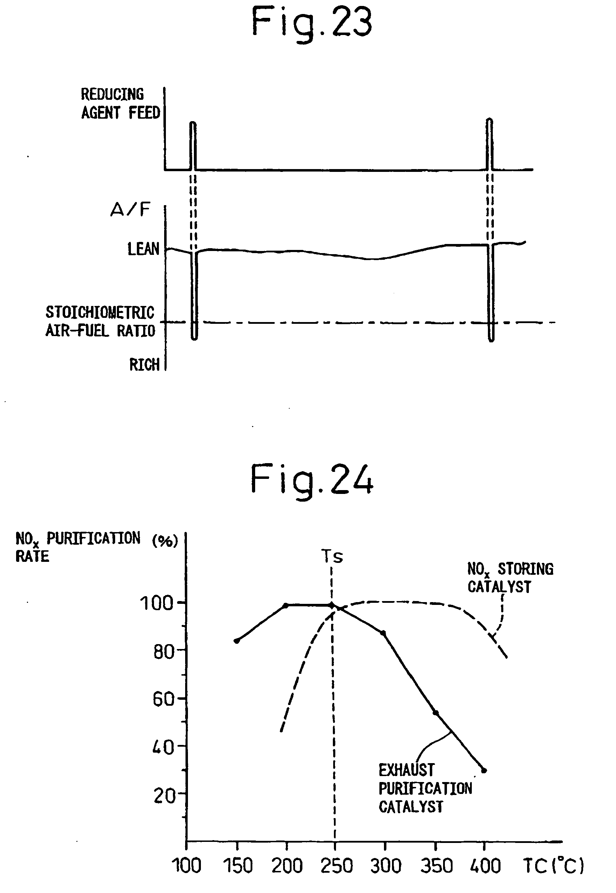

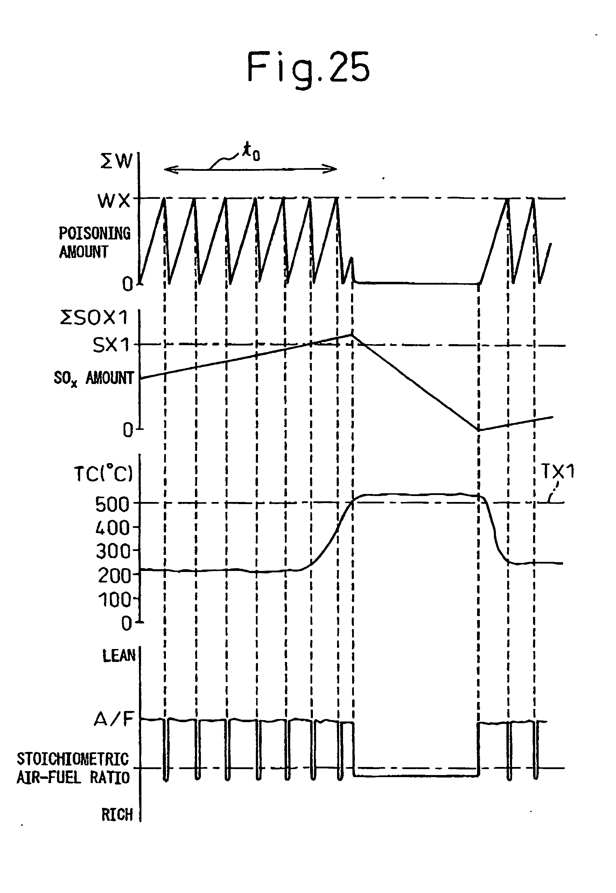

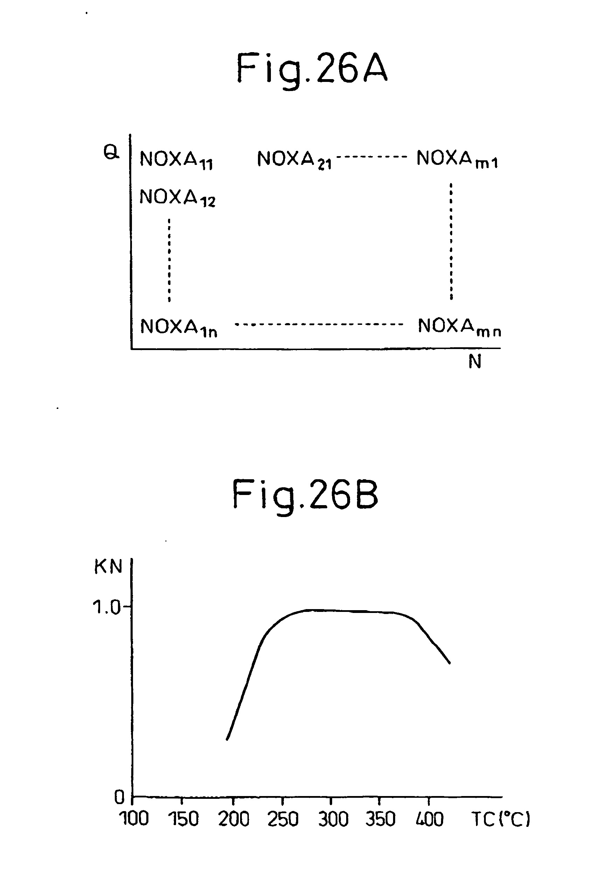

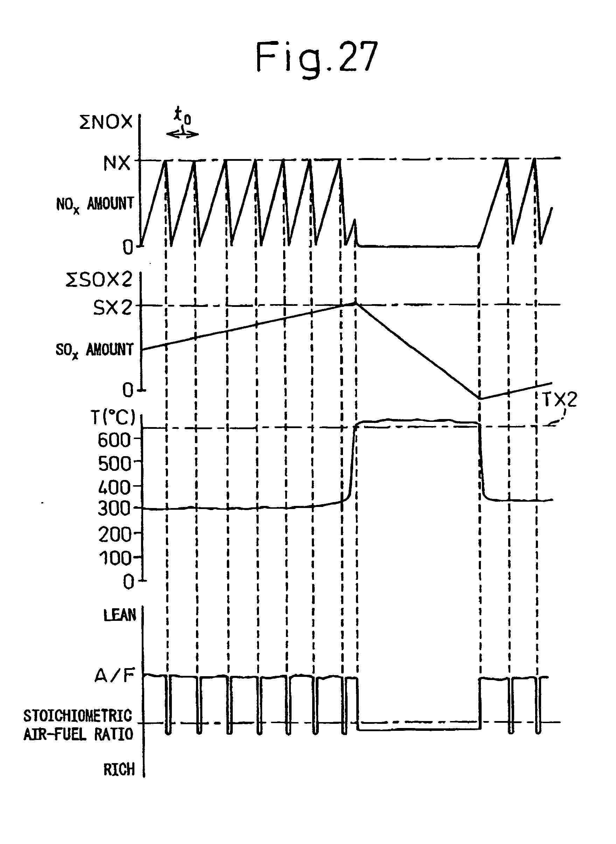

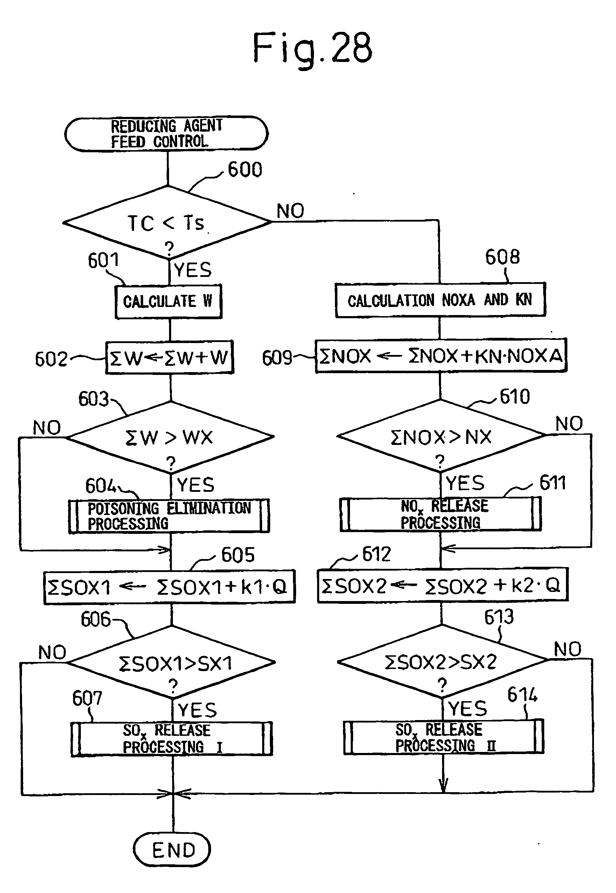

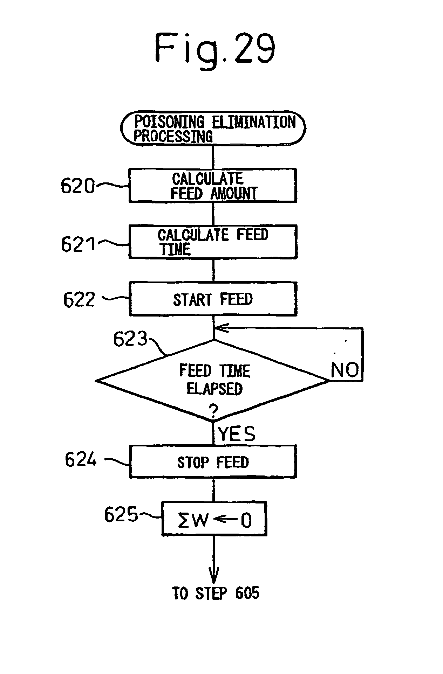

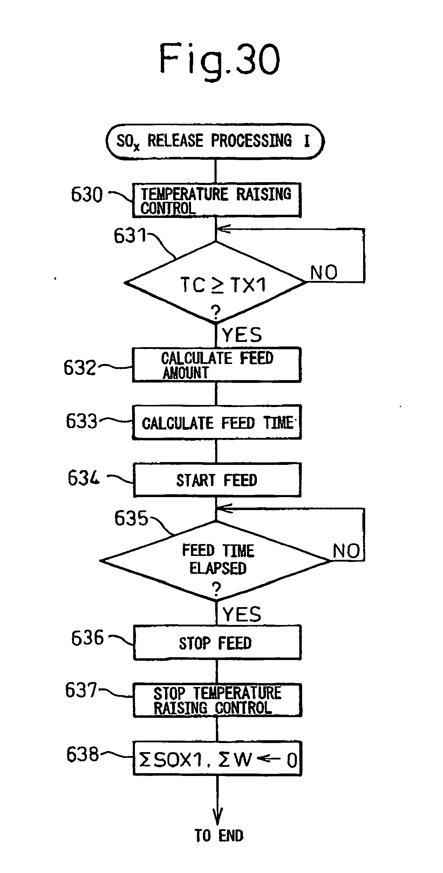

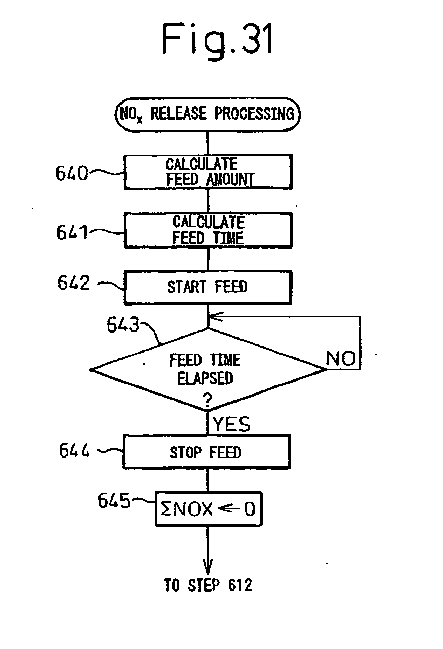

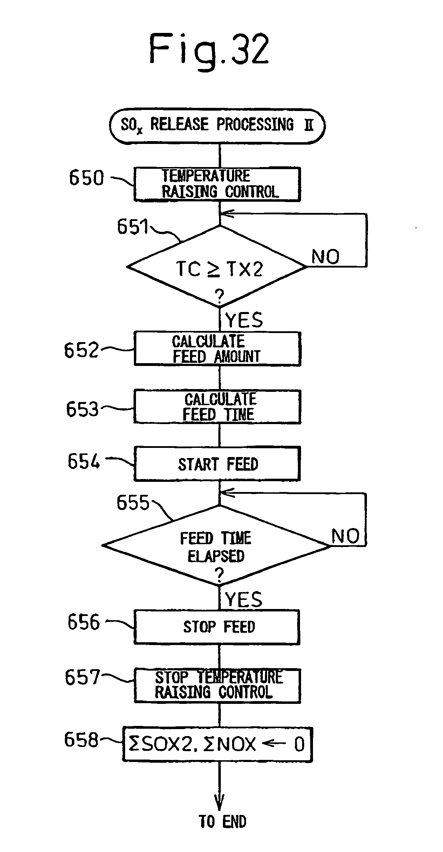

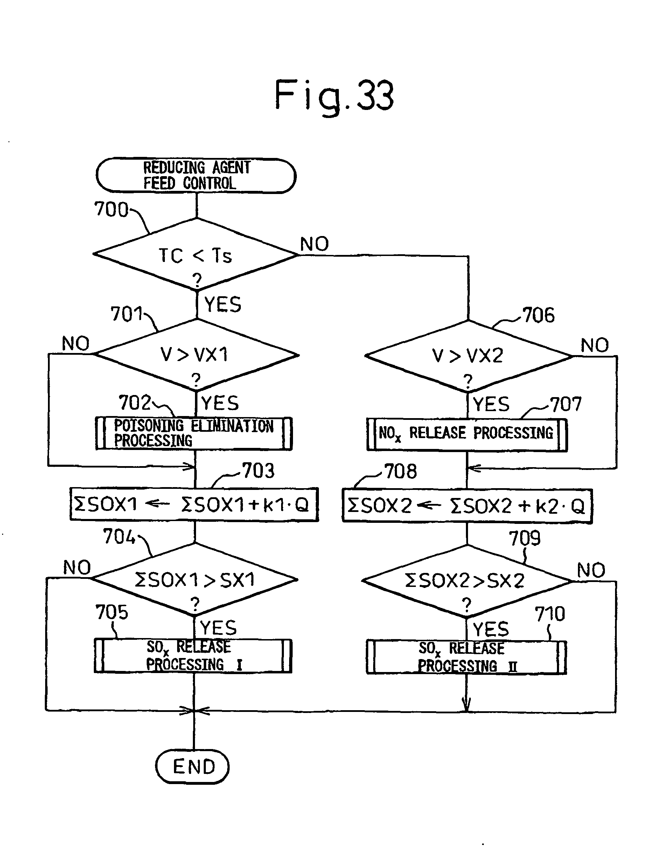

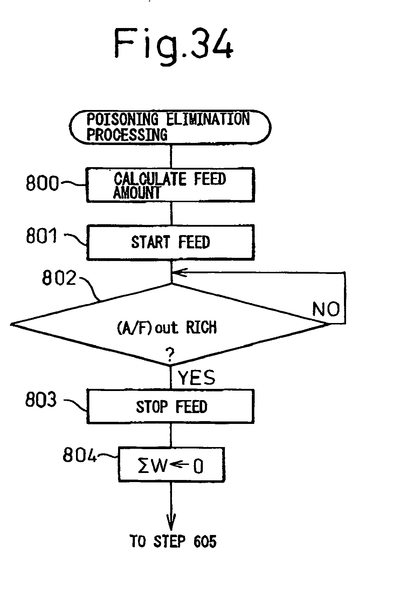

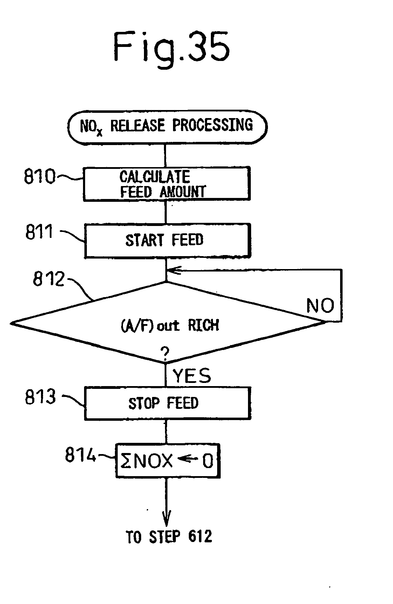

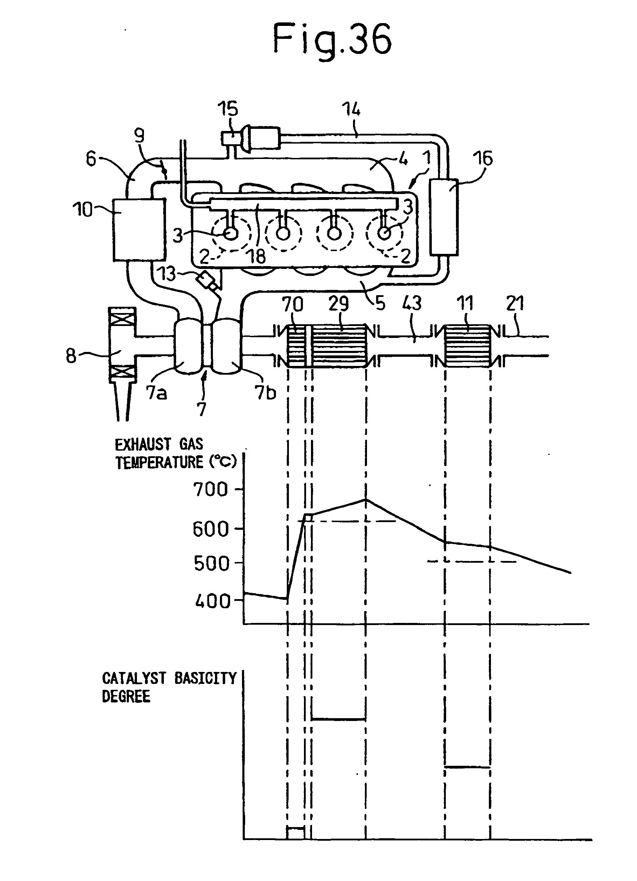

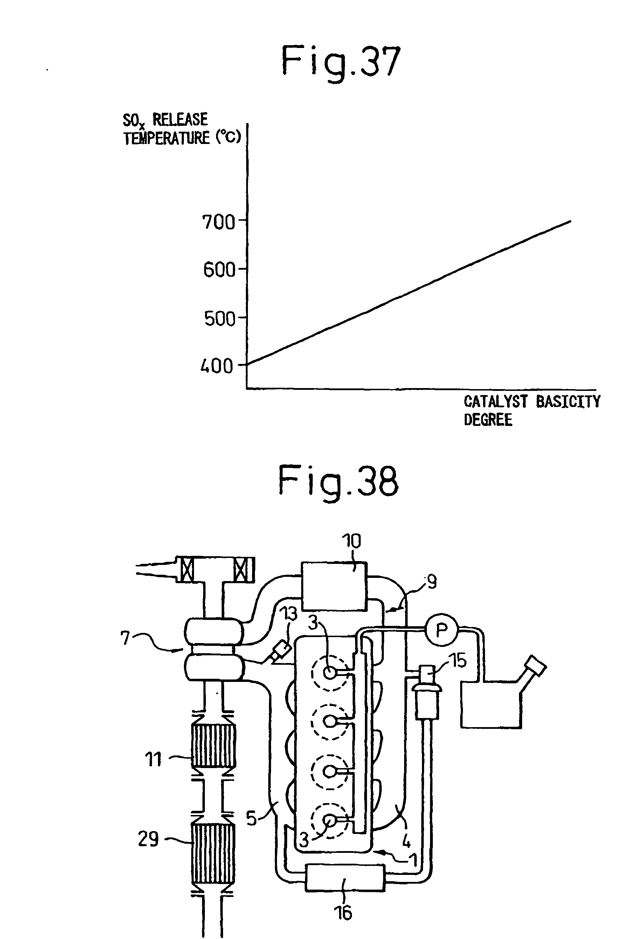

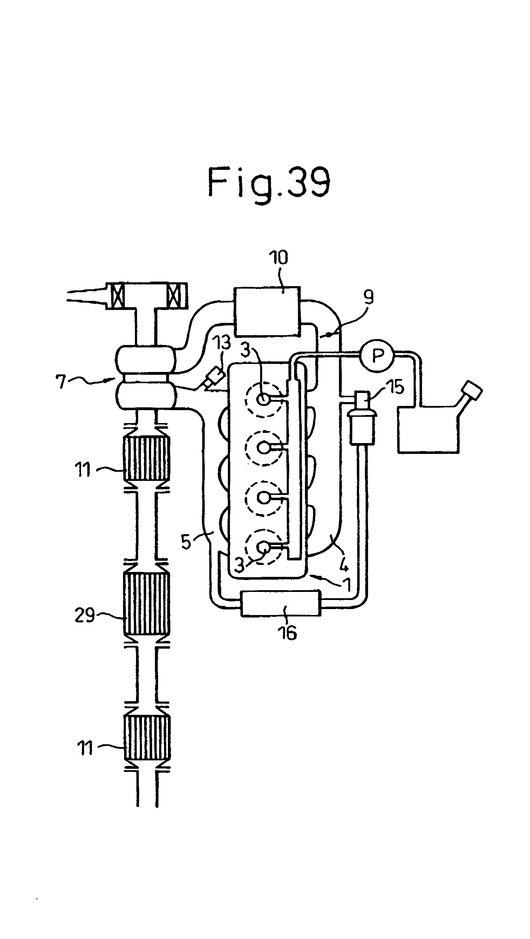

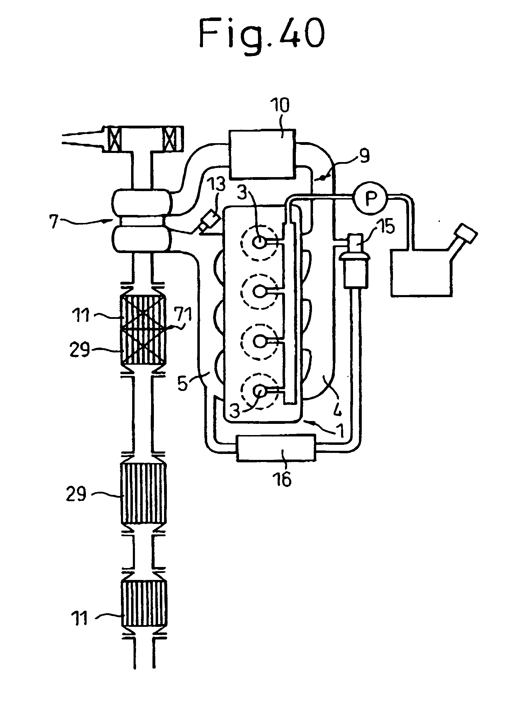

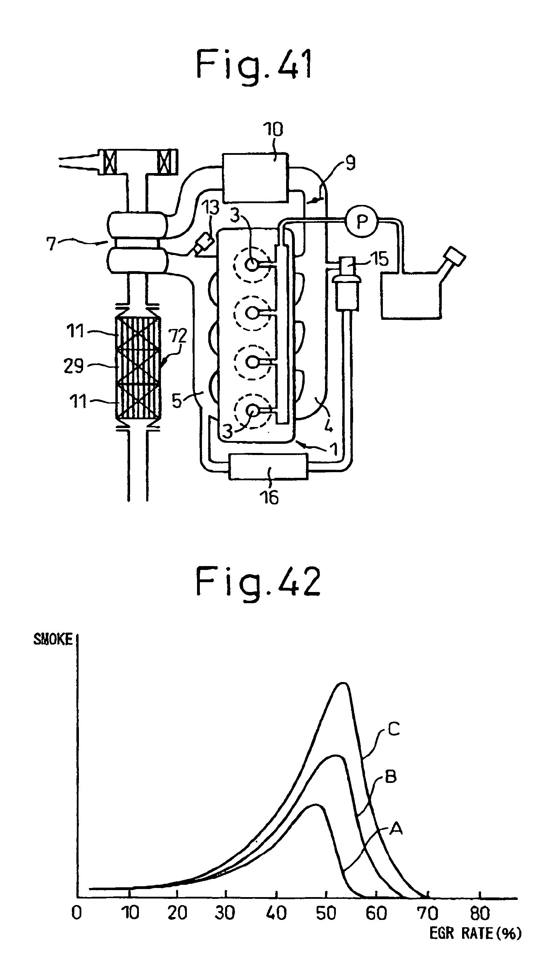

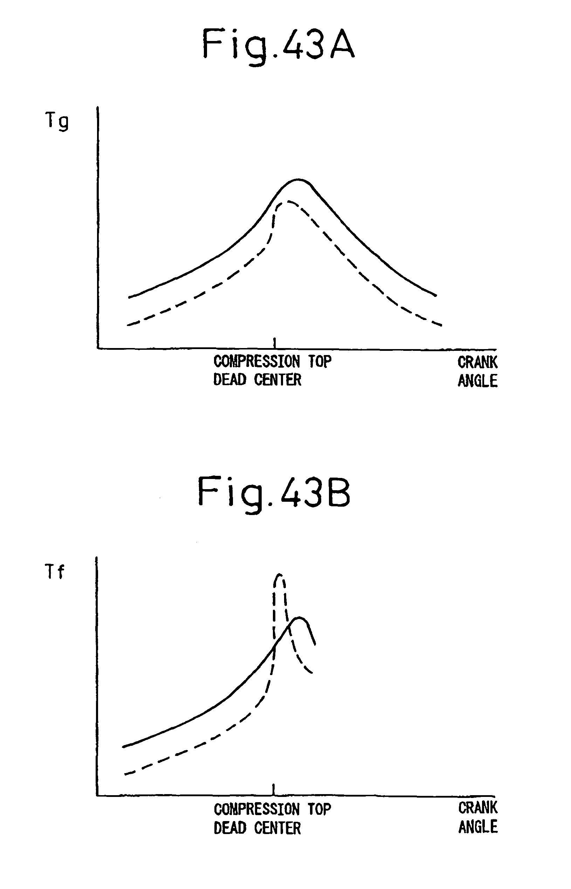

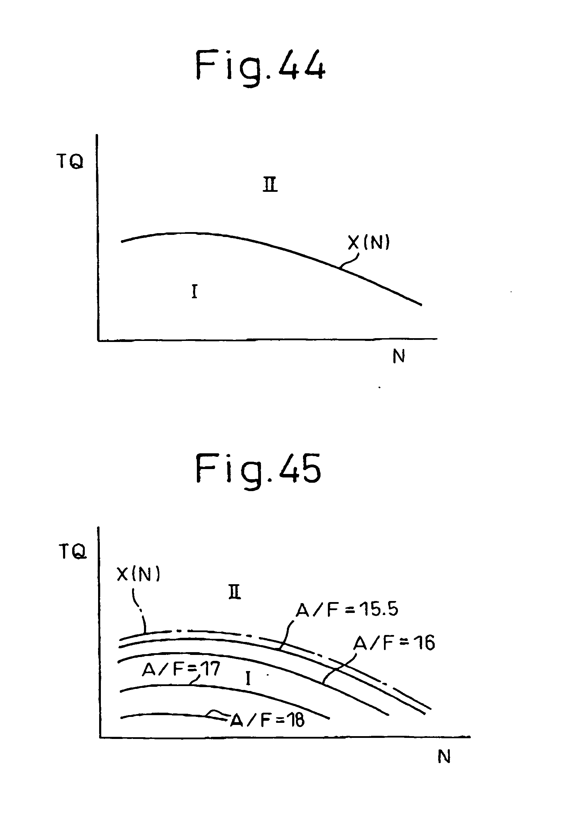

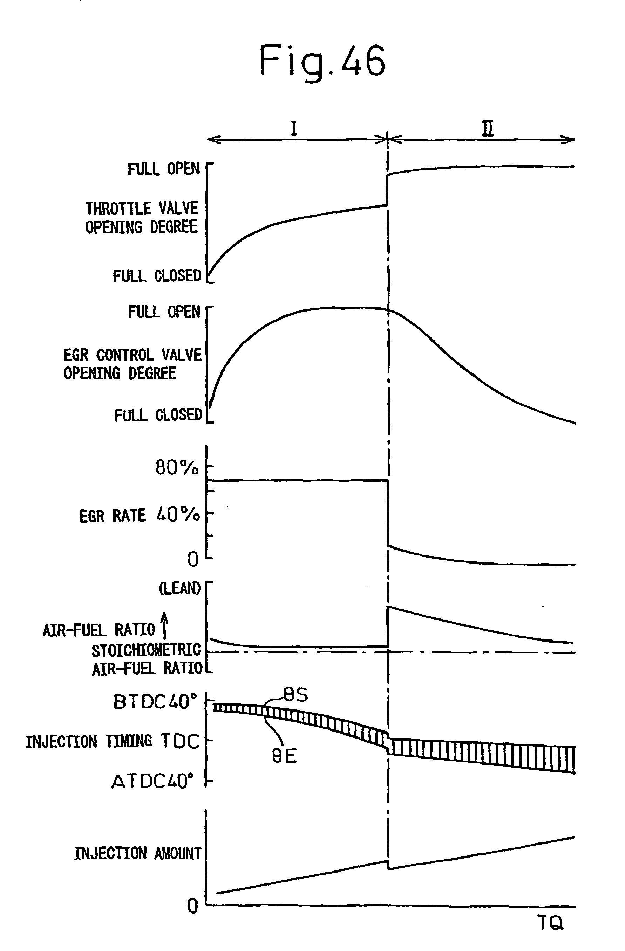

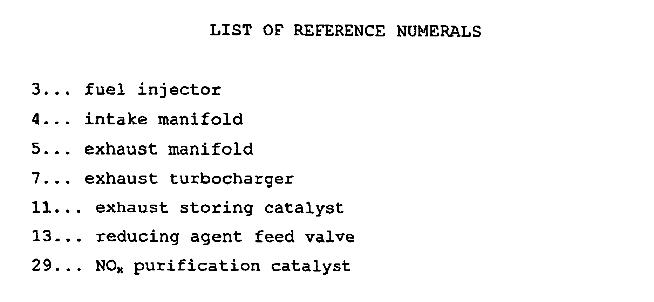

FIG. 1 is an overview of a compression ignition type internal combustion engine; FIG. 2 is a view schematically showing a cross-section of the carrier surface part of an exhaust purification catalyst; FIG. 3 is a view showing the change in the air-fuel ratio of exhaust gas due to feed of a reducing agent; FIG. 4 is a view of the NOₓ purification rate, FIG. 5A to FIG. 5C are views of the amount of oxygen poisoning per unit time; FIG. 6 is a view of a time chart of control for eliminating oxygen poisoning and control for releasing SOₓ; FIG. 7 is a view of various fuel injection patterns; FIG. 8 is a flow chart of control of different flags; FIG. 9 and FIG. 10 are flow charts of control for feeding a reducing agent; FIG. 11A and FIG. 11B are views for explaining control of the air-fuel ratio of exhaust gas; FIG. 12 is a flow chart of control for feeding a reducing agent; FIG. 13 is a view of changes in the air-fuel ratio of exhaust gas; FIG. 14 is a flow chart of control for feeding a reducing agent; FIG. 15A and FIG. 15B are views of a particulate filter; FIG. 16 is an overview of another embodiment of a compression ignition internal combustion engine; FIG. 17 is an overview of still another embodiment of a compression ignition internal combustion engine; FIG. 18 is an overview of still another embodiment of a compression ignition internal combustion engine; FIG. 19 is a view of the NOₓ purification rate; FIG. 20 is a flow chart of control for feeding a urea aqueous solution; FIG. 21 is an overview of still another embodiment of a compression ignition internal combustion engine; FIG. 22 is a view schematically illustrating a cross-section of the part of the carrier surface of a NOₓ storing catalyst; FIG. 23 is a view of changes in the air-fuel ratio of exhaust gas due to feeding a reducing agent; FIG. 24 is a view of the exhaust gas purification rate; FIG. 25 is a view of a time chart of control for eliminating oxygen poisoning and control for releasing SOₓ; FIG. 26A and FIG. 26B are views for explaining the amount of NOₓ absorption per unit time; FIG. 27 is a view of a time chart of control for releasing NOₓ and SOₓ; FIG. 28 is a flow chart of control for feeding a reducing agent; FIG. 29 is a flow chart of processing for eliminating poisoning; FIG. 30 is a flow chart of processing I for releasing SOₓ; FIG. 31 is a flow chart of processing for releasing NOₓ; FIG. 32 is a flow chart of processing II for releasing SOₓ; FIG. 33 is a flow chart of control for feeding a reducing agent; FIG. 34 is a flow chart for processing for eliminating poisoning; FIG. 35 is a flow chart of processing for releasing NOₓ; FIG. 36 is a view showing the exhaust gas temperature and catalyst basicity degree when releasing NOₓ; FIG. 37 is a view of the relationship between the SOₓ release temperature and catalyst basicity degree; FIG. 38 is an overview of still another embodiment of a compression ignition internal combustion engine; FIG. 39 is an overview of still another embodiment of a compression ignition internal combustion engine; FIG. 40 is an overview of still another embodiment of a compression ignition internal combustion engine; FIG. 41 is an overview of still another embodiment of a compression ignition internal combustion engine; FIG. 42 is a view of the amount of generation of smoke; FIG. 43A and FIG. 43B are views of the gas temperature etc. in a combustion chamber; FIG. 44 is a view of operating regions I and II; FIG. 45 is a view of the air-fuel ratio A/F; and FIG. 46 is a view of the changes in the throttle valve opening degree etc.

### BEST MODE FOR WORKING THE INVENTION

FIG. 1 shows the case of application of the present invention to a compression ignition type internal combustion engine. Note that the present invention may also be applied to a spark ignition type internal combustion engine.

Referring to FIG. 1, 1 indicates an engine body, 2 a combustion chamber of each cylinder, 3 an electronically controlled fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7. The inlet of the compressor 7a is connected to an air cleaner 8. Inside the intake duct 6 is arranged a throttle valve 9 driven by a step motor. Further, around the intake duct 6 is arranged a cooling device 10 for cooling the intake air flowing through the inside of the intake duct 6. In the embodiment shown in FIG. 1, the engine cooling water is guided into the cooling device 10. The engine cooling water cools the intake air. On the other hand, the exhaust manifold 5 is connected to an inlet of an exhaust turbine 7b of the exhaust turbocharger 7, while the outlet of the exhaust turbine 7b is connected to a casing 12 housing a exhaust purification catalyst 11. The outlet of the collecting portion of the exhaust manifold 5 is provided with a reducing agent feed valve 13 for feeding a reducing agent comprised of for example a hydrocarbon into the exhaust gas flowing through the inside of the exhaust manifold 5.

The exhaust manifold 5 and the intake manifold 4 are connected through an exhaust gas recirculation (hereinafter referred to as an "EGR") passage 14. The EGR passage 14 is provided with an electronically controlled EGR control valve 15. Further, around the EGR passage 14 is arranged a cooling device 16 for cooling the EGR gas flowing through the inside of the EGR passage 14. In the embodiment shown in FIG. 1, the engine cooling water is guided into the cooling device 16. The engine cooling water cools the EGR gas. On the other hand, each fuel injector 3 is connected through a fuel feed tube 17 to a fuel reservoir, that is, a so-called "common rail" 18. This common rail 18 is supplied with fuel from an electronically controlled variable discharge fuel pump 19. The fuel supplied into the common rail 18 is supplied through each fuel feed tube 17 to the fuel injector 3.

An electronic control unit 30 is comprised of a digital computer provided with a ROM (read only memory) 32, a RAM (random access memory) 33, a CPU (microprocessor) 34, an input port 35, and an output port 36 all connected to each other by a bidirectional bus 31. The exhaust purification catalyst 11 is provided with a temperature sensor 20 for detecting the temperature of the exhaust purification catalyst 11. The output signal of the temperature sensor 20 is input to the input port 35 through a corresponding AD converter 37. Further, the exhaust pipe 21 connected to the outlet of the casing 12 if necessary has various types of sensors 22 arranged in it. An accelerator pedal 40 has a load sensor 41 generating an output voltage proportional to the amount of depression L connected to it. The output voltage of the load sensor 41 is input to the input port 35 through a corresponding AD converter 37. Further, the input port 35 has a crank angle sensor 42 generating an output pulse each time the crankshaft turns for example by 15 degrees connected to it. On the other hand, the output port 36 is connected through corresponding drive circuits 38 to the fuel injectors 3, throttle valve driving step motor 9, EGR control valve 15, and fuel pump 19.

The exhaust purification catalyst 11 shown in FIG. 1 is comprised of a monolithic catalyst. A base of the exhaust purification catalyst 11 carries a catalyst carrier. FIG. 2 schematically shows the cross-section of the surface part of this catalyst carrier 50. As shown in FIG. 2, the catalyst carrier 50 carries a precious metal catalyst 51 dispersed on its surface. In the present invention, as the catalyst carrier 50, a carrier 50 on the surface of which there are base points exhibiting basicity is used. Further, in this embodiment of the present invention, platinum is used as the precious metal catalyst 51.

In this way, in this embodiment, the surface of the catalyst carrier 50 made of alumina carries only platinum 51 and is not formed with a layer of an NOₓ absorbent comprised of an alkali metal or alkali earth able to absorb NOₓ. The inventors studied an exhaust purification catalyst 11 comprised of a carrier 50 made of alumina carrying only platinum 51 on its surface and as a result learned that with such an exhaust purification catalyst 11, if temporarily making the air-fuel ratio rich when burning fuel under a lean air-fuel ratio, a NOₓ purification rate of 90 percent or more can be obtained when the temperature of the exhaust purification catalyst 11 is a low temperature of 250°C or less.

The inventors engaged in studies on the reasons for this from various angles and as a result reached the conclusion that when purifying NOₓ, an action of direct breakdown of NOₓ at the surface of the platinum 51 or action of selective reduction of NOₓ or an action of adsorption of NOₓ on the catalyst carrier 50 or action of holding the NOₓ on the catalyst carrier 50 occur simultaneously in parallel and that due to these actions occurring simultaneously in parallel, a high NOₓ purification rate of 90 percent or more is obtained.

That is, platinum 51 inherently has activity at a low temperature. The first action which occurs when NOₓ is being purified is the action, when the air-fuel ratio of the exhaust gas is lean, of the NOₓ in the exhaust gas being absorbed on the surface of the platinum 51 in the state separated into N and 0 and the separated N forming N₂ and being diassociated from the platinum 51, that is, action of direct breakdown of NOₓ. This direct breakdown action forms part of the NOₓ purification action.

The second action which occurs when NOₓ is being purified is the action, when the air-fuel ratio of the exhaust gas is lean, of the NOₓ adsorbed on the surface of the platinum 51 being selectively reduced by the HC adsorbed on the catalyst carrier 50. This NOₓ selective reduction action forms part of the NOₓ purification action.

On the other hand, the NOₓ in the exhaust gas, that is, the NO, is oxidized on the surface of the platinum 51 to become NO₂ and is further oxidized to become nitrate ions NO₃⁻. The third action which occurs when NOₓ is being purified is the action of the NO₂ being adsorbed on the catalyst carrier 50. This adsorption action forms part of the NOₓ purification action. Further, the catalyst carrier 50 made of alumina has base points on its surface. The fourth action which occurs when NOₓ is being purified is the action of the nitrate ions NO₃⁻ being held at the base points on the surface of the catalyst carrier 10. This holding action forms part of the NOₓ purification action.

In this way, when NOₓ is being purified, these various actions occur simultaneously. As a result, a high purification rate of 90 percent or more is obtained.

However, if exposing an exhaust purification catalyst 11 comprised of a catalyst carrier 50 made of alumina on which only platinum 51 is carried to exhaust gas of a lean air-fuel ratio, the NOₓ purification rate gradually falls. This is because the surface of the platinum 51 becomes covered by oxygen atoms, that is, the surface of the platinum 51 suffers from oxygen poisoning, whereby the direct breakdown of NOₓ or selective reduction of NOₓ on the surface of the platinum 51 becomes difficult. That is, if the surface of the platinum 51 is covered by oxygen atoms, the NO in the exhaust gas will no longer be able to be adsorbed on the surface of the platinum 51, so direct breakdown of the NOₓ will become difficult. If the surface of the platinum 51 is covered by oxygen atoms, the NO will no longer be able to be absorbed on the surface of the platinum 51, so the selective reduction of the NOₓ will become difficult.

However, if temporarily making the air-fuel ratio rich at this time, the oxygen atoms covering the surface of the platinum 51 will be consumed for oxidation of the HC or CO, that is, the oxygen poisoning of the surface of the platinum 51 will be eliminated, therefore when the air-fuel ratio is returned to lean, direct breakdown of NOₓ or selective reduction of NOₓ again becomes performed well.

However, if the surface of the platinum 51 is covered by oxygen atoms, the NOₓ will easily be oxidized on the surface of the platinum 51 and therefore the amount of the NOₓ adsorbed or held on the catalyst carrier 50 will increase. Despite this, the fact that the NOₓ purification rate drops means that the direct breakdown of the NOₓ or the selective reduction of the NOₓ governs the NOₓ purification action. Therefore, when carrying only platinum 51 on a catalyst carrier 50 made of alumina, preventing the surface of the platinum 51 as a whole from becoming poisoned by oxygen is the most important issue. Therefore, it becomes necessary to temporarily switch the air-fuel ratio of the exhaust gas from lean to rich before the entire surface of the platinum 51 suffers from oxygen poisoning.

Next, this will be explained with reference to experimental results.

FIG. 3 shows the case of injecting a reducing agent from a reducing agent feed valve 13 for exactly the time t1 at time intervals of the time t2 and thereby maintaining the air-fuel ratio of the exhaust gas flowing into the exhaust purification catalyst 11 (ratio of the amount of air supplied to the intake passage, the combustion chambers 2, and the exhaust passage upstream of the exhaust purification catalyst and the amount of fuel and reducing agent) lean for exactly the time t2, then making it rich for exactly the time t1.

FIG. 4 shows the relationship between the temperature TC (°C) of the exhaust purification catalyst 11 and the NOₓ purification rate (%) when temporarily switching the air-fuel ratio of the exhaust gas flowing into the exhaust purification catalyst 11 from lean to rich for exactly the time t1 shown in FIG. 3 before the entire surface of the platinum 51 suffers from oxygen poisoning in an exhaust purification catalyst 11 comprised of a catalyst carrier 50 made of alumina on which only platinum 51 is carried. Note that FIG. 4 shows the case where the amount of coating of the catalyst carrier 50 made of the alumina is 150 (g) and the amount of platinum 51 carried is 3 (g).

From FIG. 4, it will be understood that a NOₓ purification rate of 90 percent or more, that is, close to 100 percent, is obtained when the temperature TC of the exhaust purification catalyst 11 is a low temperature of 250°C or less. Note that it is learned that when the temperature TC of the exhaust purification catalyst 11 becomes 200°C or less, the NOₓ purification rate falls somewhat, but even if the temperature TC of the exhaust purification catalyst 11 falls to 150°C, the NOₓ purification rate is 80 percent or more and is still high. Further, if the temperature TC of the exhaust purification catalyst 11 becomes higher than 250°C, the NOₓ purification rate will gradually fall. That is, if the temperature TC of the exhaust purification catalyst 11 becomes higher, the NO will have difficultly being adsorbed on the surface of the platinum 51 and as a result not only will the direct breakdown action of the NOₓ become difficult, but also the selective reduction action of the NOₓ will becomes difficult, so the NOₓ purification rate will gradually fall.

Note that even if increasing the amount of the platinum 51 carried over 3 (g), the NOₓ purification rate will not increase much at all, but if reducing the amount of platinum 51 carried to less than 3 (g), the NOₓ purification rate will fall.

Further, FIG. 4 shows the case of making the lean time t2 when the air-fuel ratio of the exhaust gas is lean in FIG. 3 60 seconds and making the rich time 51 where the air-fuel ratio of the exhaust gas is made rich 3 seconds. In this case, a rich time t1 of 3 seconds is sufficient to completely eliminate the oxygen poisoning of the platinum 51, so if seen from the viewpoint of eliminating the oxygen poisoning, there is no sense even if making the rich time t1 more than 3 seconds. As opposed to this, if making the rich time 51 shorter than 3 seconds, the NOₓ purification rate will gradually fall.

Further, it is also possible to use rhodium as the precious metal catalyst 51 in addition to platinum. In this case, in FIG. 4, the region of the temperature TC (°C) where the NOₓ purification rate becomes 90 percent or more spreads to the high temperature side and the NOₓ purification rate at the high temperature side becomes higher.

If temporarily switching the air-fuel ratio of the exhaust gas flowing into the exhaust purification catalyst 11 from lean to rich before the precious metal catalyst 51 suffers from oxygen poisoning at its entire surface, it is possible to obtain a NOₓ purification rate of 90 percent or more. Note that if temporarily switching the air-fuel ratio of the exhaust gas from lean to rich, the NO₂ adsorbed on the catalyst carrier 50 or the nitrate ions NO₃⁻ held on the catalyst carrier 50 will be reduced by the HC and CO. That is, if temporarily switching the air-fuel ratio of the exhaust gas from lean to rich so as to eliminate the oxygen poisoning of the surface of the precious metal catalyst 51, the NOₓ adsorbed or held on the catalyst carrier 50 will be removed and therefore when the air-fuel ratio is returned from rich to lean, the NOₓ adsorption action or the nitrate ion NO₃⁻ holding action will be started again.

As explained above, when carrying only platinum 51 on a catalyst carrier 50 made of alumina, the direct breakdown of the NOₓ and selective reduction of the NOₓ will govern the NOₓ purification rate. However, the action of adsorption of NO₂ to the catalyst carrier 50 and the action of holding nitrate ions NO₃⁻ on the catalyst carrier 50 also contribute to purification of NOₓ. However, it has been known in the past that if there is NO₂ in the exhaust gas, some NO₂ will be adsorbed on the catalyst no matter what the catalyst. In this embodiment of the present invention, the NO in the exhaust gas is oxidized at the platinum 51, whereby NO₂ is produced and therefore NO₂ is adsorbed on the exhaust purification catalyst 11.

As opposed to this, the nitrate ions NO₃⁻ are not held at all catalysts. In order to get nitrate ions NO₃⁻ held on a catalyst, the surface of the catalyst must exhibit basicity. In the embodiment according to the present invention, as explained above, since the catalyst carrier 50 is comprised of alumina, the catalyst carrier 50 has base points having basicity on its surface and therefore the nitrate ions NO₃⁻ are held at the base points present on the surface of the catalyst carrier 50.

However, the basicity of the base points present on the surface of a catalyst carrier 50 comprised of alumina is not that strong. Therefore, the holding force on the nitrate ions NO₃⁻ is also not that strong. Accordingly, if the temperature TC of the exhaust purification catalyst 11 rises, the NOₓ held on the exhaust purification catalyst 11 is disassociated from the exhaust purification catalyst 11. As shown in FIG. 4, the NOₓ purification rate gradually falls along with the rise of the temperature TC of the exhaust purification catalyst 11 because of the presence of this NOₓ disassociation action.

On the other hand, the higher the basicity of the base points on the surface of the catalyst carrier 50, the greater the amount of NOₓ held in the form of nitrate ions NO₃⁻. Therefore, to get the amount of NOₓ held on the exhaust purification catalyst 11 to increase, it is sufficient to increase the number of base points or raise the basicity of the base points. In this case, as shown by reference numeral 52 in FIG. 2, if adding to the inside of the catalyst carrier 50 made of alumina at least one element selected from potassium K, sodium Na, lithium Li, cesium Cs, rubidium Rb, or another alkali metal, barium Ba, calcium Ca, strontium Sr, or another alkali earth, lanthanum La, yttrium Y, or another rare earth, it is possible to increase the number of base points or raise the basicity of the base points. In this case, these lanthanum La, barium Ba, or other additive 52 can be added to the inside of the catalyst carrier 50 so as to form part of the crystal structure of the alumina for stabilization of the structure or can be added to the inside of the catalyst carrier 50 so as to form a salt between the alumina and additive 52. Note that only naturally if increasing the amount of the lanthanum La, barium Ba, or other additive 52, the amount of NOₓ held at the exhaust purification catalyst 11 increases when the air-fuel ratio of the exhaust gas is lean.

On the other hand, if raising the basicity of the base points in this way, the holding force on the nitrate ions NO₃⁻ becomes stronger. Therefore, the nitrate ions NO₃⁻ become harder to disassociate even if the temperature TC of the exhaust purification catalyst 11 rises. Therefore, if raising the basicity of the base points, the NOₓ purification rate at the high temperature side becomes higher in FIG. 4.

However, exhaust gas also includes SO₂. This SO₂ is oxidized on the platinum 51 and becomes SO₃. Next, this SO₃ is further oxidized on the platinum 51 and becomes sulfate ions SO₄²⁻. If the catalyst has basicity, the sulfate ions SO₄²⁻ are held on the catalyst. Further, the sulfate ions SO₄²⁻ are held on the catalyst more easily than the nitrate ions NO₃⁻. Therefore, if nitrate ions NO₃⁻ are held on the catalyst, sulfate ions SO₄²⁻ will also necessarily be held on the catalyst. In this embodiment according to the present invention, nitrate ions NO₃⁻ are held on the catalyst carrier 50. Therefore, in this embodiment according to the present invention, the sulfate ions SO₄²⁻ are also held on the catalyst carrier 50.

On the other hand, as explained at the start, if forming a layer of a NOₓ absorbent comprised of an alkali metal or alkali earth on the catalyst carrier, SOₓ forms a sulfate in the layer of the NOₓ absorbent. However, this sulfate is hard to break down. Unless raising the temperature of the catalyst to 600°C or more and making the air-fuel ratio of the exhaust gas rich in that state, it is not possible to get the SOₓ released from the catalyst.

However, in this embodiment, the basicity of the base points present on the surface of the catalyst carrier 50 comprised of the alumina is extremely low compared with the basicity of the NOₓ absorbent. Therefore, the SOₓ is held at the base points on the surface of the catalyst carrier 50 not in the form of a sulfate, but in the form of sulfate ions SO₄²⁻. Further, in this case, the holding force on the sulfate ions SO₄²⁻ is considerably small.

If the holding force on the sulfate ions SO₄²⁻ is small in this way, the sulfate ions SO₄²⁻ will break down and disassociate at a low temperature. In fact, in this embodiment, if raising the temperature TC of the exhaust purification catalyst 11 to about 500°C and making the air-fuel ratio of the exhaust gas rich, it is possible to get the SOₓ held at the exhaust purification catalyst 11 released from the exhaust purification catalyst 11.

However, as explained above, by adding lanthanum La, barium Ba, or another additive 52 to the catalyst carrier 50 so as to raise the basicity of the base points on the surface of the catalyst carrier 50, it is possible to increase the amount of NOₓ held on the catalyst carrier 50 when the air-fuel ratio of the exhaust gas is lean and therefore in particular possible to raise the NOₓ purification rate at the high temperature side. However, if raising the basicity of the base points of the surface of the catalyst carrier 50, the amount of SOₓ held on the catalyst carrier 50 will increase and further the holding force on the SOₓ will increase. As a result, the SOₓ release temperature of the exhaust purification catalyst 11 required for releasing the SOₓ will rise.

Note that as the catalyst carrier 50, not only alumina, but also various other carriers known from the past can be used so long as they are carriers having base points on the catalyst carrier surface.

Next, the processing of the NOₓ and SOₓ will be explained based on specific embodiments.

First, a first embodiment of calculating the amount of oxygen poisoning of the precious metal catalyst, for example, the platinum 51, switching the air-fuel ratio of the exhaust gas from lean to rich when the calculated amount of oxygen poisoning exceeds a predetermined allowable value, and thereby eliminating oxygen poisoning of the platinum 51 will be explained.

As shown in FIG. 5A, the amount W of oxygen poisoning of platinum 51 per unit time is proportional to the oxygen concentration in the exhaust gas. Further, as shown in FIG. 5B, the amount W of oxygen poisoning of platinum 51 per unit time increases the higher the temperature of the exhaust purification catalyst 11. Here, the oxygen concentration in the exhaust gas and the temperature of the exhaust purification catalyst 11 are determined from the operating state of the engine. That is, these are functions of the fuel injection amount Q and engine speed N. Therefore, the amount W of the oxygen poisoning of the platinum 51 per unit time becomes a function of the fuel injection amount Q and engine speed N. In the first embodiment, the amount W of oxygen poisoning of the platinum 51 per unit time is found in advance by experiments in accordance with the fuel injection amount Q and engine speed N. This amount W of oxygen poisoning is stored as a function of the fuel injection amount Q and engine speed N in advance in the form of a map in the ROM 32 as shown in FIG. 5C.

FIG. 6 shows a time chart of the control for eliminating oxygen poisoning and the control for releasing SOₓ. As shown in FIG. 6, each time the cumulative value ΣW of the amount W of oxygen poisoning exceeds the allowable value WX, a reducing agent is supplied from the reducing agent feed valve 13 and the air-fuel ratio A/F of the exhaust gas flowing into the exhaust purification catalyst 11 is temporarily switched from lean to rich. At this time, the oxygen poisoning of the platinum 51 is eliminated and the NOₓ adsorbed or held on the catalyst carrier 50 is released from the catalyst carrier 50 and reduced.

On the other hand, the cumulative value ΣSOX of the amount of SOₓ held on the exhaust purification catalyst 11 is also calculated and, when the cumulative value ΣSOX of the amount of SOₓ exceeds an allowable value SX, the action of releasing SOₓ from the exhaust purification catalyst 11 is performed. That is, first, the temperature TC of the exhaust purification catalyst 11 is raised to the SOₓ release temperature TX. The SOₓ release temperature TX is about 500°C when no additive 52 is added to the catalyst carrier 41. When additive 52 is added to the catalyst carrier 51, it is a temperature between about 500°C to 550°C depending on the amount of addition of the additive 52.

When the temperature TC of the exhaust purification catalyst 11 reaches the SOₓ release temperature TX, the air-fuel ratio of the exhaust gas flowing into the exhaust purification catalyst 11 is switched from lean to rich and the SOₓ starts to be released from the exhaust purification catalyst 11. While the SOₓ is being released, the temperature TC of the exhaust purification catalyst 11 is held at the SOₓ release temperature TX or more and the air-fuel ratio of the exhaust gas is held rich. Next, when the SOₓ release action ends, the action of raising the temperature of the exhaust purification catalyst 11 is stopped and the air-fuel ratio of the exhaust gas is returned to lean.

As explained above, when SOₓ should be released from the exhaust purification catalyst 11, the temperature of the exhaust purification catalyst 11 is raised until reaching the NOₓ release temperature TX. Next, the method of raising the temperature TC of the exhaust purification catalyst 11 will be explained with reference to FIG. 7.

One of the methods effective for raising the temperature TC of the exhaust purification catalyst 11 is the method of retarding the fuel injection timing to compression top dead center or on. That is, normally the main fuel Qₘ, in FIG. 7, is injected near compression top dead center as shown by (I). In this case, as shown by (II) of FIG. 7, if the injection timing of the main fuel Qm is retarded, the after burn time becomes longer and therefore the exhaust gas temperature rises. If the exhaust gas temperature rises, the temperature TC of the exhaust purification catalyst 11 will rise along with it.

Further, to raise the temperature TC of the exhaust purification catalyst 11, as shown by (III) of FIG. 7, it is possible to inject auxiliary fuel Qv near suction top dead center in addition to the main fuel Qm. If additionally injecting auxiliary fuel Qv in this way, the fuel which can be burned is increased by exactly the auxiliary fuel Qv, so the exhaust gas temperature rises and therefore the temperature TC of the exhaust gasc 11 rises.

On the other hand, if injecting auxiliary fuel Qv near suction top dead center in this way, during the compression stroke, the heat of compression causes aldehydes, ketones, peroxides, carbon monoxide, and other intermediate products to be produced from this auxiliary fuel Qv. These intermediate products cause the reaction of the main fuel Qm to be accelerated. Therefore, in this case, as shown by (III) of FIG. 7, even if greatly retarding the injection timing of the main fuel Qm, good combustion is obtained without causing misfires. That is, since it is possible to greatly retard the injection timing of the main fuel Qm in this way, the temperature of the exhaust gas becomes considerably higher and therefore the temperature TC of the exhaust purification catalyst 11 can be made to quickly rise.

Further, the temperature TC of the exhaust purification catalyst 11 may be made to rise as shown in (IV) of FIG. 7 by injecting auxiliary fuel Qp in addition to the main fuel Qm during the expansion stroke or the exhaust stroke. That is, in this case, the majority of the auxiliary fuel Qp is exhausted into the exhaust passage in the form of unburned HC without being burned. This unburned HC is oxidized by the excess oxygen in the exhaust purification catalyst 11. The heat of oxidation reaction occurring at that time causes the temperature TC of the exhaust purification catalyst 11 to rise.

FIG. 8 shows a routine for control of an oxygen poisoning elimination flag showing that oxygen poisoning of the platinum 51 should be eliminated and a SOₓ release flag showing that SOₓ should be released. This routine is executed by interruption every predetermined time interval.

Referring to FIG. 8, first, at step 100, the amount W of oxygen poisoning per unit time is calculated from the map shown in FIG. 5C. Next, at step 101, the amount W of oxygen poisoning is added to ΣW to calculate the cumulative value ΣW of the amount of oxygen poisoning. Next, at step 102, it is judged if the cumulative value ΣW of the amount of oxygen poisoning has exceeded an allowable value WX, that is, if the situation is a little before the entire surface of the platinum 51 suffers from oxygen poisoning. When ΣW≤WX, the routine jumps to step 104. As opposed to this, when ΣW>WX, the routine proceeds to step 103, where the poisoning elimination flag is set, then the routine proceeds to step 104.

At step 104, the value k·Q of a constant k multiplied with the fuel injection amount Q is added to ΣSOX. The fuel contains a certain amount of sulfur. Therefore, the amount of SOₓ held in the exhaust purification catalyst 11 per unit time can be expressed by k·Q. Therefore, the ΣSOX obtained by adding ΣSOX to k·Q expresses the cumulative value of the amount of SOₓ held on the exhaust purification catalyst 11. Next, at step 105, it is judged if the cumulative amount ΣSOX of the amount of SOₓ exceeds an allowable value SX. When ΣSOX≤SX, the processing cycle is ended. When ΣSOX>SX, the routine proceeds to step 106, where the SOₓ release flag is set.

Next, a routine for control for feeding a reducing agent will be explained while referring to FIG. 9.

Referring to FIG. 9, first, at step 200, it is judged if the poisoning elimination flag is set. When the poisoning elimination flag is not set, the routine jumps to step 208. As opposed to this, when the poisoning elimination flag is set, the routine proceeds to step 201, where it is judged if the temperature of the exhaust purification catalyst 11 is lower than an allowable temperature TL. This allowable temperature TL is for example the temperature TC of the exhaust purification catalyst 11 when the NOₓ purification rate becomes 30 percent. When carrying only platinum 51 on a catalyst carrier 50 made of alumina, this allowable temperature TL is about 400°C. When TC≥TL, that is, when a high NOₓ purification rate cannot be obtained even if periodically making the air-fuel ratio of the exhaust gas rich, the routine jumps to step 208. That is, when the temperature TC of the exhaust purification catalyst 11 exceeds about 400°C, the action of switching the air-fuel ratio from lean to rich is prohibited. As opposed to this, when TC<TL, that is, when a high NOₓ purification rate can be obtained by periodically making the air-fuel ratio of the exhaust gas rich, the routine jumps to step 202.

At step 202, the feed amount of the reducing agent required for making the air-fuel ratio of the exhaust gas a rich air-fuel ratio of for example about 13 is calculated. Next, at step 203, the feed time of the reducing agent is calculated. This reducing agent feed time is normally 10 seconds or less. Next, at step 204, the feed of the reducing agent from the reducing agent feed valve 13 is started. Next, at step 205, it is judged if the feed time of the reducing agent calculated at step 203 has elapsed. When the feed time of the reducing agent has not elapsed, the routine jumps to step 208, where the feed of the reducing agent is continued and the air-fuel ratio of the exhaust gas is maintained at the rich air-fuel ratio of about 13. As opposed to this, when the feed time of the reducing agent has elapsed, that is, when the oxygen poisoning of the platinum 51 has been eliminated, the routine proceeds to step 206, where the feed of the reducing agent is stopped, then the routine proceeds to step 207, where the ΣW and the oxygen poisoning elimination flag are cleared. Next, the routine proceeds to step 208.

At step 208, it is judged if the SOₓ release flag has been set. When the SOₓ release flag has not been set, the processing cycle is ended. As opposed to this, when the SOₓ release flag has been set, the routine proceeds to step 209, where the control is performed for raising the temperature of the exhaust purification catalyst 11. That is, the fuel injection pattern from the fuel injector 3 is changed to an injection pattern of any of (II) to (IV) of FIG. 7. If the fuel injection pattern is changed to any injection pattern of (II) to (IV) of FIG. 7, the exhaust gas temperature rises and therefore the temperature of the exhaust purification catalyst 11 rises. Next, the routine proceeds to step 210.

At step 210, it is judged if the temperature TC of the exhaust purification catalyst 11 detected by the temperature sensor 20 has reached the SOₓ release temperature TX or more. When TC<TX, the processing cycle is ended. As opposed to this, when TC≥TX, the routine proceeds to step 211, where the feed amount of the reducing agent required for making the air-fuel ratio of the exhaust gas a rich air-fuel ratio of about 14 is calculated. Next, at step 212, the feed time of the reducing agent is calculated. The feed time of the reducing agent is several minutes. Next, at step 213, the feed of the reducing agent from the reducing agent feed valve 13 is started. Next, at step 214, it is judged if the feed time of the reducing agent calculated at step 212 has elapsed. When the feed time of the reducing agent has not elapsed, the processing cycle is ended. At this time, the feed of the reducing agent is continued and the air-fuel ratio of the exhaust gas is maintained at the rich air-fuel ratio of about 14. As opposed to this, when the feed time of the reducing agent has elapsed, that is, when the release of the SOₓ held in the exhaust purification catalyst 11 has been completed, the routine proceeds to step 215, where the feed of the reducing agent is stopped. Next, at step 216, the action of raising the temperature of the exhaust purification catalyst 11 is stopped, then the routine proceeds to step 217, where the ΣSOX, ΣW, and SOₓ release flag are cleared.

FIG. 11A, FIG. 11B, and FIG. 12 show another embodiment. In this embodiment, as the sensor 22 arranged in the exhaust pipe 21, a NOₓ concentration sensor able to detect the concentration of NOₓ in the exhaust gas is used. This NOₓ concentration sensor 22, as shown in FIG. 11B, generates an output voltage V proportional to the NOₓ concentration.

If the oxygen poisoning of the platinum 51 progresses, the NOₓ purification rate gradually falls. As a result, the NOₓ concentration in the exhaust gas gradually increases. Therefore, the amount of oxygen poisoning of the precious metal catalyst, for example, the platinum 51, can be estimated from the NOₓ concentration in the exhaust gas. In this embodiment, when the amount of oxygen poisoning estimated from the NOₓ concentration in the exhaust gas exceeds a predetermined allowable value, that is, as shown in FIG. 11A, when the output voltage V of the NOₓ concentration sensor 22 exceeds a set value VX, the air-fuel ratio of the exhaust gas is switched from lean to rich.

FIG. 12 shows the routine for control for feeding a reducing agent in this embodiment.

Referring to FIG. 12, first, at step 300, it is judged if the output voltage V of the NOₓ concentration sensor 22 has exceeded a set value VX. When V≤VX, the routine jumps to step 208 of FIG. 10. As opposed to this, when V>VX, the routine proceeds to step 301, where the feed amount of the reducing agent required for making the air-fuel ratio of the exhaust gas the rich air-fuel ratio of about 13 is calculated. Next, at step 302, the feed time of the reducing agent is calculated. This feed time of the reducing agent is normally 10 seconds or less. Next, at step 303, the feed of the reducing agent from the reducing agent feed valve 13 is started. Next, at step 304, it is judged if the feed time of the reducing agent calculated at step 302 has elapsed. When the feed time of the reducing agent has not elapsed, the routine jumps to step 208 of FIG. 10, where the feed of the reducing agent is continued and the air-fuel ratio of the exhaust gas is maintained at a rich air-fuel ratio of about 13. As opposed to this, when the feed time of the reducing agent has elapsed, that is, when the oxygen poisoning of the platinum 51 has been eliminated, the routine proceeds to step 305, where the feed of the reducing agent is stopped, then the routine proceeds to step 208 of FIG. 10.

Note that in this embodiment as well, the routine for control of the flags shown in FIG. 8 is used, but in this embodiment, it is not necessary to calculate the amount W of oxygen poisoning, so in the routine for control of the flags shown in FIG. 8, only step 104 to step 106 are executed. Further, in this embodiment, as explained above, after the routine shown in FIG. 12, the routine shown in FIG. 10 is executed, but at step 217 in the routine shown in FIG. 10, only the ΣSOX and SOₓ release flag are cleared.

FIG. 13 and FIG. 14 show still another embodiment. In this embodiment, to eliminate the oxygen poisoning of the precious metal catalyst, for example, the platinum 51, it is judged if the oxygen poisoning of the platinum 51 has been eliminated when the air-fuel ratio of the exhaust gas is made rich. When it is judged that the oxygen poisoning of the platinum 51 has been eliminated, the air-fuel ratio of the exhaust gas is switched from rich to lean.

More specifically speaking, in this embodiment, as the sensor 22 arranged in the exhaust pipe 21, an air-fuel ratio for detecting the air-fuel ratio of the exhaust gas flowing out from the exhaust purification catalyst 11 is used. As shown in FIG. 13, when the air-fuel ratio (A/F) of the exhaust gas flowing into the exhaust purification catalyst 11 is switched from lean to rich, that is, when a reducing agent is supplied from the reducing agent feed valve 13, the reducing agent, that is, the hydrocarbon, is oxidized by the oxygen on the platinum 51. While there is oxygen on the platinum 51, the air-fuel ratio(A/F)out of the exhaust gas flowing out from the exhaust purification catalyst 11 is maintained at about the stoichiometric air-fuel ratio. Next, when there is no longer any oxygen on the platinum 51, the hydrocarbon passes through the exhaust purification catalyst 11, so the air-fuel ratio(A/F)out of the exhaust gas flowing out from the exhaust purification catalyst 11 becomes rich. Therefore, when the air-fuel ratio (A/F) in of the exhaust gas flowing into the exhaust purification catalyst 11 is switched from lean to rich, it is possible to judge that the oxygen poisoning of the platinum 51 has been eliminated when the air-fuel ratio(A/F)out of the exhaust gas flowing out from the exhaust purification catalyst 11 becomes rich.

FIG. 14 shows a routine for control for feeding a reducing agent in this embodiment.

Referring to FIG. 14, first, at step 400, it is judged if the poisoning elimination flag has been set. When the poisoning elimination flag has not been set, the routine jumps to step 208 of FIG. 10. As opposed to this, when the poisoning elimination flag is set, the routine proceeds to step 401, where the feed amount of the reducing agent required for making the air-fuel ratio of the exhaust gas a rich air-fuel ratio of about 13 or so is calculated. Next, the routine proceeds to step 402, where the feed of the reducing agent from the reducing agent feed valve 13 is started. Next, at step 403, it is judged if the air-fuel ratio(A/F)out of the exhaust gas detected by the air-fuel ratio sensor 22 has become rich. When the air-fuel ratio(A/F)out is not rich, the routine jumps to step 208 of FIG. 10. As opposed to this, when the air-fuel ratio (A/F) out becomes rich, that is, when the oxygen poisoning of the platinum 51 is eliminated, the routine proceeds to step 404, where the feed of the reducing agent is stopped, then the routine proceeds to step 405, where the ΣW and poisoning elimination flag are cleared. Next, the routine proceeds to step 208 of FIG. 10.

Next, an embodiment using a particulate filter instead of the exhaust purification catalyst 11 will be explained. FIG. 15A and FIG. 15B show the structure of this particulate filter 11. Note that FIG. 15A is a front view of the particulate filter 11, while FIG. 15B is a side sectional view of the particulate filter 11. As shown in FIGS. 15A and 15B, the particulate filter 11 forms a honeycomb structure and is provided with a plurality of exhaust passage pipes 60 and 61 extending in parallel with each other. These exhaust passage pipes are comprised by exhaust gas inflow passages 60 with downstream ends sealed by plugs 62 and exhaust gas outflow passages 61 with upstream ends sealed by plugs 63. Note that the hatched portions in FIG. 15A show plugs 63. Therefore, the exhaust gas inflow passages 60 and the exhaust gas outflow passages 61 are arranged alternately through thin wall partitions 64. In other words, the exhaust gas inflow passages 60 and the exhaust gas outflow passages 61 are arranged so that each exhaust gas inflow passage 60 is surrounded by four exhaust gas outflow passages 61, and each exhaust gas outflow passage 61 is surrounded by four exhaust gas inflow passages 60.

The particulate filter 11 is formed from a porous material such as for example cordierite. Therefore, the exhaust gas flowing into the exhaust gas inflow passages 60 flows out into the adjoining exhaust gas outflow passages 61 through the surrounding partitions 64 as shown by the arrows in FIG. 15B.

In this embodiment, the peripheral walls of the exhaust gas inflow passages 60 and exhaust gas outflow passages 61, that is, the surfaces of the two sides of the partitions 64 and inside walls of the fine holes of the partitions 64 are formed on them with a layer of a catalyst carrier comprised of alumina. The catalyst carrier carries a precious metal catalyst on it. Note that in this embodiment, platinum Pt is used as the precious metal catalyst.

In this embodiment as well, platinum is carried on the catalyst carrier made of alumina. Therefore, in this embodiment as well, the NOₓ purification rate shown in FIG. 4 is obtained.

Further, in this embodiment, the particulate contained in the exhaust gas is trapped in the particulate filter 11 and the trapped particulate is successively made to burn by the heat of the exhaust gas. If a large amount of particulate deposits on the particulate filter 11, the injection pattern is switched to any one of the injection patterns (II) to (IV) of FIG. 7 and the exhaust gas temperature is made to rise. Due to this, the deposited particulate is ignited and burned.

FIG. 16 and FIG. 17 show other embodiments of a compression ignition internal combustion engine.

In the embodiment shown in FIG. 16, the exhaust passage upstream of the exhaust purification catalyst 11 has arranged in it an exhaust purification catalyst the same as the exhaust purification catalyst 11 or a particulate filter or NOₓ selective reducing catalyst 23 having the function of selectively reducing NOₓ but not having the function of absorbing NOₓ. In the embodiment shown in FIG. 17, the exhaust passage downstream of the exhaust purification catalyst 11 has arranged in it a particulate filter or a NOₓ selective reducing catalyst 23 having the function of selectively reducing NOₓ, but not having the function of absorbing NOₓ.

If arranging in the exhaust passage upstream of the exhaust purification catalyst 11 an exhaust purification catalyst 23 the same as the exhaust purification catalyst 11, the downstream exhaust purification catalyst 11 will become lower in temperature than the upstream exhaust purification catalyst 23, so when the temperature of the upstream exhaust purification catalyst 23 becomes high and the NOₓ purification rate drops, a high NOₓ purification rate can be obtained at the downstream exhaust purification catalyst 11. Further, the particulate filter 23 may be one not having a precious metal catalyst and catalyst carrier or one having a precious metal catalyst and a catalyst carrier. Further, as the NOₓ selective reducing catalyst 23, a Cu-zeolite catalyst may be used. However, a Cu-zeolite catalyst 23 is low in heat resistance, so when using a Cu-zeolite catalyst 23, as shown in FIG. 17, it is preferable to arrange the Cu-zeolite catalyst 23 at the downstream side of the exhaust purification catalyst 11. Note that in the embodiments shown in FIG. 16 and FIG. 17 as well, the feed of the reducing agent is controlled by a method similar to the method shown in FIG. 6.

FIG. 18 shows still another embodiment of the compression ignition internal combustion engine.

In this embodiment, the exhaust passage downstream of the exhaust purification catalyst 11 has arranged in it a NOₓ selective reducing catalyst 24 having the function of selectively reducing NOₓ, but not having the function of absorbing NOₓ. As this NOₓ selective reducing catalyst 24, use is made of a catalyst V₂O₈/TiO₂ having titania as a carrier and carrying vanadium oxide on this carrier (hereinafter referred to as a "vanadium-titania catalyst") or a catalyst Cu/ZSM 5 having zeolite as a carrier and carrying copper on the carrier (hereinafter referred to as a "copper-zeolite carrier").

Further, the exhaust passage between the NOₓ selective reducing catalyst 24 and the exhaust purification catalyst 11 has arranged in it a urea feed valve 25 for feeding a urea aqueous solution. This urea feed valve 25 feeds a urea aqueous solution by a feed pump 26. Further, the intake passage has an intake air detector 27 arranged inside it. A NOₓ concentration sensor is used as the sensor 22 arranged in the exhaust pipe 21.

If feeding urea aqueous solution from the urea feed valve 25 into the exhaust gas when the air-fuel ratio of the exhaust gas is lean, the NO contained in the exhaust gas is reduced by the ammonia NH₃ generated from the urea CO(NH₂)₂ on the NOₓ selective reducing catalyst 24 (for example, 2NH₃+2NH+1/2O²→2N₂+3H₂O). In this case, a certain amount of urea is required for reducing the NOₓ contained in the exhaust gas and completely removing the NOₓ in the exhaust gas. Below, the amount of urea required for reducing and completely removing the NOₓ in the exhaust gas will be referred to as an amount of urea of an equivalence ratio of the urea/NOₓ of 1. Note that an equivalence ratio of urea/NOₓ of 1 will be referred to below simply as an equivalence ratio of 1.

The solid line of FIG. 19 shows the relationship between the NOₓ purification rate due to the exhaust purification catalyst 11 and the temperature TC of the exhaust purification catalyst 11 of the same value as shown in FIG. 4. The broken line of FIG. 19 shows the relationship between the NOₓ purification rate when feeding a urea aqueous solution to give an amount of urea of an equivalence ratio of 1 with respect to the amount of NOₓ in the exhaust gas and the temperature TC of the NOₓ selective reducing catalyst 24. From FIG. 19, when a urea aqueous solution is fed so as to give an amount of urea of an equivalence ratio of 1 with respect to the amount of NOₓ in the exhaust gas, if the temperature TC of the NOₓ selective reducing catalyst 24 becomes about 300°C or more, the NOₓ purification rate becomes about 100 percent. As the temperature TC of the NOₓ selective reducing catalyst 24 falls, it is learned that the NOₓ purification rate falls.

In this embodiment, the feed of the reducing agent from the reducing agent feed valve 13 is controlled by the routine for control of the flags shown in FIG. 8 and the routine for control for feeding the reducing agent shown in FIG. 10 in the region I with a temperature TC of the exhaust purification catalyst 11 lower than the set temperature TL, for example, 300°C, in FIG. 19. Therefore, a high NOₓ purification rate is obtained by the exhaust purification catalyst 11 in the region I. Note that in this case, as will be understood from FIG. 19, the TL at step 201 of FIG. 9 is 300°C.

On the other hand, in the region where the temperature TC of the NOₓ selective reducing catalyst 24 is higher than the set temperature TN (<TL) in FIG. 19, a urea aqueous solution is fed by the urea aqueous solution feed control routine shown in FIG. 20, whereby the NOₓ is purified by the NOₓ selective reducing catalyst 24.

That is, referring to FIG. 20, first, at step 500, it is judged if the temperature TC of the NOₓ selective reducing catalyst 24 is higher than a set temperature TN, for example, 250°C. When TC≤TN, the processing cycle is ended. As opposed to this, when TC>TN, the routine proceeds to step 501, where the amount of NOₓ exhausted from a combustion chamber 2 per unit time is found from the NOₓ concentration detected by the NOₓ concentration sensor 22 and the amount of intake air detected by the intake air detector 27. Based on this amount of NOₓ, the amount of urea per unit time giving an equivalence ratio of 1 with respect to the amount of NOₓ is calculated. Next, at step 502, the feed amount of the urea aqueous solution is calculated from the calculated amount of urea. Next, at step 503, the amount of the urea aqueous solution calculated at step 502 is fed from the urea feed valve 13. Therefore, in the region II, a high NOₓ purification rate is obtained by the NOₓ selective reducing catalyst 24.

As will be understood from FIG. 19, in the region where the region I and region II overlap, the action of purification of NOₓ by the exhaust purification catalyst 11 and the action of purification of NOₓ by the NOₓ selective reducing catalyst 24 are performed. Therefore, the NOₓ purification rate in this region becomes substantially 100 percent. Therefore, a high NOₓ purification rate can be obtained over a wide temperature region.

Next, another embodiment enabling a high NOₓ purification rate to be obtained over a wide temperature region will be explained.

In this embodiment, as shown in FIG. 21, a NOₓ storing catalyst 29 housed in a casing 28 is arranged upstream of the exhaust purification catalyst 11. That is, in this embodiment, the casing 28 housing the NOₓ storing catalyst 29 is connected to the outlet of the exhaust turbine 7b of the exhaust turbocharger 7, while the outlet of the casing 28 is connected to a casing 12 housing the exhaust purification catalyst 11 through the exhaust pipe 43.

Further, in this embodiment, in addition to the temperature sensor 20 for detecting the temperature of the exhaust purification catalyst 11, a temperature sensor 48 for detecting the temperature of the NOₓ storing catalyst 29 is attached to the NOₓ storing catalyst 11. The exhaust pipe 43 connecting the outlet of the NOₓ storing catalyst 29 and the inlet of the exhaust purification catalyst 11 has arranged in it a temperature sensor 49 for detecting the temperature of the temperature of the exhaust gas flowing through these catalysts 29 and 11. Note that in practice at least one of these temperature sensors 20, 48, and 49 is provided.

The NOₓ storing catalyst 29 shown in FIG. 21 is comprised of a monolithic catalyst. A base of the NOₓ storing catalyst 29 carries a catalyst carrier made of for example alumina. FIG. 22 schematically shows the cross-section of the surface part of this catalyst carrier 45. As shown in FIG. 22, the catalyst carrier 45 carries a precious metal catalyst 46 dispersed on its surface. Further, the catalyst carrier 45 is formed on its surface with a layer of a NOₓ absorbent 47.

In this embodiment, platinum Pt is used as the precious metal catalyst 46. As the ingredient forming the NOₓ absorbent 47, for example, at least one element selected from potassium K, sodium Na, cesium Cs, or another alkali metal, barium Ba, calcium Ca, or another alkali earth, lanthanum La, yttrium Y, or another rare earth may be used.

If the ratio of the air and fuel (hydrocarbons) supplied to the engine intake passage, combustion chambers 2, and exhaust passage upstream of the NOₓ storing catalyst 29 is referred to as the "air-fuel ratio of the exhaust gas", the NOₓ absorbent 47 performs an NOₓ absorption and release action of absorbing the NOₓ when the air-fuel ratio of the exhaust gas is lean and releasing the absorbed NOₓ when the oxygen concentration in the exhaust gas falls. Note that when the inside of the exhaust passage upstream of the NOₓ storing catalyst 29 is not supplied with fuel (hydrocarbons) or air, the air-fuel ratio of the exhaust gas matches with the air-fuel ratio of the air-fuel mixture supplied to the combustion chamber 2. Therefore, in this case, the NOₓ absorbent 47 absorbs the NOₓ when the air-fuel ratio of the air-fuel mixture supplied into the combustion chamber 2 is lean, while releases the absorbed NOₓ when the oxygen concentration in the air-fuel mixture supplied to the combustion chamber 2 falls.

That is, if explaining this taking as an example the case of using barium Ba as the ingredient forming the NOₓ absorbent 47, when the air-fuel ratio of the exhaust gas is lean, that is, when the oxygen concentration in the exhaust gas is high, the NO contained in the exhaust gas is oxidized on the platinum Pt 46 such as shown in FIG. 22 to become NO₂, then is absorbed in the NOₓ absorbent 47 and diffuses in the NOₓ absorbent 47 in the form of nitrate ions NO₃⁻ while bonding with the barium oxide BaO. In this way, the NOₓ is absorbed in the NOₓ absorbent 47. So long as the oxygen concentration in the exhaust gas is high, NO₂ is produced on the surface of the platinum Pt 46. So long as the NOₓ absorbing capability of the NOₓ absorbent 47 is not saturated, the NO₂ is absorbed in the NOₓ absorbent 47 and nitrate ions NO₃⁻ are produced.

As opposed to this, by making the air-fuel ratio in the combustion chamber 2 rich or the stoichiometric air-fuel ratio or feeding a reducing agent from the reducing agent feed valve 13 to make the air-fuel ratio of the exhaust gas rich or the stoichiometric air-fuel ratio, since the oxygen concentration in the exhaust gas falls, the reaction proceeds in the reverse direction (NO₃⁻ → NO₂) and therefore the nitrate ions NO₃⁻ in the NOₓ absorbent 47 are released from the NOₓ absorbent 47 in the form of NO₂. Next, the released NOₓ is reduced by the unburned HC or CO included in the exhaust gas.

In this way, when the air-fuel ratio of the exhaust gas is lean, that is, when burning fuel under a lean air-fuel ratio, the NOₓ in the exhaust gas is absorbed in the NOₓ absorbent 47. However, if continuing to burn fuel under a lean air-fuel ratio, during that time the NOₓ absorbing capability of the NOₓ absorbent 47 will end up becoming saturated and therefore NOₓ will end up no longer being able to be absorbed by the NOₓ absorbent 47. Therefore, in this embodiment, as shown in FIG. 23, before the absorbing capability of the NOₓ absorbent 47 becomes saturated, a reducing agent is supplied from the reducing agent feed valve 14 so as to temporarily make the air-fuel ratio of the exhaust gas rich and thereby release the NOₓ from the NOₓ absorbent 47.

However, platinum Pt 46 inherently has activity at a low temperature. However, the basicity of the NOₓ absorbent 47 is considerably strong. Therefore, the activity of the platinum Pt 46 at a low temperature, that is, the oxidation ability, ends up being weakened. As a result, if the temperature TC of the NOₓ storing catalyst 11 falls, the NO oxidation action weakens and the NOₓ purification rate falls. The solid line of FIG. 24 shows the relationship between the NOₓ purification rate due to the exhaust purification catalyst 11, which is the same as the value shown in FIG. 4, and the temperature TC of the exhaust purification catalyst 11, while the broken line of FIG. 24 shows the relationship between the NOₓ purification rate by the NOₓ storing catalyst 29 and the temperature TC of the NOₓ storing catalyst 29. In this embodiment, as will be understood from FIG. 24, when the temperature TC of the NOₓ storing catalyst 29 becomes lower than about 250°C, the NOₓ purification rate rapidly falls.

On the other hand, exhaust gas contains SO₂. This SO₂ is oxidized at the platinum Pt 46 and becomes SO₃. Next, this SO₂ is absorbed in the NOₓ absorbent 47 and bonds with the barium oxide BaO while diffusing in the NOₓ absorbent 47 in the form of sulfate ions SO₄²⁻ to produce the stable sulfate BaSO₄. However, the NOₓ absorbent 47 has a strong basicity, so this sulfate BaSO₄ is stable and hard to break down. If just making the air-fuel ratio of the exhaust gas rich, the sulfate BaSO₄ will remain without being broken down. Therefore, in the NOₓ absorbent 47, the sulfate BaSO₄ will increase along with the elapse of time and therefore the amount of NOₓ which the NOₓ absorbent 47 can absorb will fall along with the elapse of time.

However, if raising the temperature of the NOₓ storing catalyst 29 to 600°C or more and in that state making the air-fuel ratio of the exhaust gas rich, SOₓ will be released from the NOₓ absorbent 47. Therefore, in this embodiment, when the amount of SOₓ absorbed in the NOₓ absorbent 47 increases, the temperature of the NOₓ storing catalyst 29 is raised up to 600°C or more and the air-fuel ratio of the exhaust gas is made rich.

As will be understood from the above explanation, in this embodiment, an exhaust purification catalyst 11 using a carrier 50 having base points on its surface and having a precious metal catalyst 51 carried dispersed on the surface of the carrier 50 without forming a layer of a NOₓ absorbent able to absorb NOₓ under a lean air-fuel ratio and a NOₓ storing catalyst 29 forming on the surface of a carrier 45 a layer of a NOₓ absorbent 47 able to absorb NOₓ under a lean air-fuel ratio and having a precious metal catalyst 46 carried dispersed on the surface are arranged in series in the engine exhaust passage. When the NOₓ in the exhaust gas is mainly being purified by the NOₓ purification catalyst 11, the air-fuel ratio of the exhaust gas flowing into the exhaust purification catalyst 11 is temporarily switched from lean to rich before the entire surface of the precious metal catalyst 51 carried on the surface of the carrier 50 of the NOₓ purification catalyst 11 suffers from oxygen poisoning. When the NOₓ in the exhaust gas is mainly being purified by the NOₓ storing catalyst 29, the air-fuel ratio of the exhaust gas flowing into the NOₓ storing catalyst 29 is temporarily switched from lean to rich before the NOₓ storing capacity of the NOₓ storing catalyst 29 becomes saturated.

Note that in this case, as will be understood from FIG. 24, when the temperature of the NOₓ purification catalyst 11 is in a first temperature region lower than a set temperature Ts, the NOₓ in the exhaust gas is mainly purified by the exhaust purification catalyst 11, while when the temperature of the NOₓ storing catalyst 29 is in the second temperature region at the higher temperature side from the first temperature region, that is, higher than the set temperature Ts, the NOₓ in the exhaust gas is mainly purified by the NOₓ storing catalyst 29. In the example shown in FIG. 24, the set temperature Ts is about 250°C.

Further, as the temperature TC of the catalyst at FIG. 24, a representative temperature representing the temperature of the exhaust purification catalyst 11 and the temperature of the NOₓ storing catalyst 29 is used. As this representative temperature TC, the temperature of the NOₓ storing catalyst 29 or the temperature of the exhaust purification catalyst 11 detected by the temperature sensor 20 or the temperature of the exhaust gas detected by the temperature sensor 49 is used. In this case, when the representative temperature TC is lower than the predetermined set temperature Ts, for example, 250°C, it is judged that the temperature of the exhaust purification catalyst 11 is in the first temperature region, while when the representative temperature TC is higher than the predetermined set temperature TS, for example 250°C, it is judged that the temperature of the NOₓ storing catalyst 29 is in the second region.

Next, the processing of the NOₓ and SOₓ will be explained.

In this embodiment as well, when NOₓ is mainly purified in the NOₓ purification catalyst 11, the amount of oxygen poisoning of the precious metal catalyst of the exhaust purification catalyst 11, for example, platinum Pt 51, is calculated using the map shown in FIG. 5C. When the calculated amount of oxygen poisoning exceeds a predetermined allowable value, the air-fuel ratio of the exhaust gas is switched from lean to rich and thereby the oxygen poisoning of the platinum Pt 51 is eliminated.

FIG. 25 shows the time chart of the control for elimination of oxygen poisoning and the control for release of SOₓ. The control shown in FIG. 25 is substantially the same as the control shown in FIG. 6. That is, as shown in FIG. 25, every time the cumulative value ΣW of the amount W of oxygen poisoning exceeds an allowable value WX, the reducing agent is supplied from the reducing agent feed valve 13 and the air-fuel ratio A/F of the exhaust gas flowing into the NOₓ purification catalyst 11 is temporarily switched from lean to rich. At this time, the oxygen poisoning of the platinum 51 is eliminated and the NOₓ adsorbed or held on the catalyst carrier 50 is released from the catalyst carrier 50 and reduced.

On the other hand, the cumulative value ΣSOX1 of the amount of SOₓ held at the exhaust purification catalyst 11 is also calculated. When the cumulative value ΣSOX1 of this amount of SOₓ exceeds an allowable value SX1, the action of release of the SOₓ from the NOₓ purification catalyst 11 is performed. That is, first, the methods shown in (II) to (IV) of FIG. 7 are used to raise the temperature TC of the NOₓ purification catalyst 11 until the SOₓ release temperature TX1 is reached. This SOₓ release temperature TX1, as explained above, is about 500°C when no additive 52 is added to the catalyst carrier 51. When an additive 52 is added to the catalyst carrier 51, it is a temperature between about 500°C to 550°C corresponding to the amount of addition of the additive 52.

If the temperature TC of the exhaust purification catalyst 11 reaches the SOₓ release temperature TX1, the air-fuel ratio of the exhaust gas flowing into the exhaust purification catalyst 11 is switched from lean to rich and the release of SOₓ from the exhaust purification catalyst 11 is started. While the SOₓ is being released, the temperature TC of the exhaust purification catalyst 11 is held at the SOₓ release temperature TX1 or more and the air-fuel ratio of the exhaust gas is held rich. Next, when the SOₓ release action ends, the action of raising the temperature of the exhaust purification catalyst 11 is stopped and the air-fuel ratio of the exhaust gas is returned to lean.

Further, in this embodiment, when the NOₓ is mainly purified by the NOₓ storing catalyst 29, the amount of NOₓ absorbed in the NOₓ absorbent 47 of the NOₓ storing catalyst 29 is calculated. When the calculated amount of NOₓ absorbed exceeds a predetermined allowable value, the air-fuel ratio of the exhaust gas is switched from lean to rich, whereby the NOₓ is made to be released from the NOₓ absorbent 47.

The amount of NOₓ exhausted from the engine per unit time is a function of the fuel injection amount Q and the engine speed N. Therefore, the amount NOXA of NOₓ absorbed in the NOₓ absorbent 47 per unit time becomes a function of the fuel injection amount Q and the engine speed N. In this embodiment, the amount NOXA of NOₓ absorbed per unit time corresponding to the fuel injection amount Q and the engine speed N is found in advance by experiments. This amount NOXA of NOₓ absorbed is stored in advance in the ROM 32 in the form of a map as shown by FIG. 26A as a function of the fuel injection amount Q and engine speed N.

On the other hand, FIG. 26B shows the relationship between the NOₓ absorption rate KN to the NOₓ absorbent 47 and the temperature TC of the NOₓ storing catalyst 29. This NOₓ absorption rate KN has the same tendency as the NOₓ absorption rate shown by the broken line of FIG. 24 with respect to the temperature TC of the NOₓ storing catalyst 29. The actual amount of NOₓ absorbed in the NOₓ absorbent 45 is shown by the product of NOXA and KN.

FIG. 27 shows a time chart of the control for release of NOₓ and SOₓ. As shown in FIG. 27, every time the cumulative value ΣNOX of the amount NOXA·KN of NOₓ absorbed exceeds an allowable value NX, a reducing agent is supplied from the reducing agent feed valve 13 and the air-fuel ratio A/F of the exhaust gas flowing into the NOₓ storing catalyst 29 is temporarily switched from lean to rich. At this time, NOₓ is released from the NOₓ absorbent 47 and reduced.

On the other hand, the ΣSOX2 of the amount of SOₓ absorbed in the NOₓ absorbent 47 is also calculated. When the cumulative value ΣSOX2 of this amount of SOₓ exceeds an allowable value SX2, the action of release of the SOₓ from the NOₓ absorbent 47 is performed. That is, first, the methods shown in (II) to (IV) of FIG. 7 are used to raise the temperature TC of the NOₓ storing catalyst 29 until the SOₓ release temperature TX2 is reached. This SOₓ release temperature TX2 is 600°C or more.

If the temperature TC of the NOₓ storing catalyst 29 reaches the SOₓ release temperature TX2, the air-fuel ratio of the exhaust gas flowing into the NOₓ storing catalyst 29 is switched from lean to rich and the release of SOₓ from the NOₓ absorbent 47 is started. While the SOₓ is being released, the temperature TC of the NOₓ storing catalyst 29 is held at the SOₓ release temperature TX2 or more and the air-fuel ratio of the exhaust gas is held rich. Next, when the SOₓ release action ends, the action of raising the temperature of the NOₓ storing catalyst is stopped and the air-fuel ratio of the exhaust gas is returned to lean.

Note that the to shown in FIG. 27 and the to shown in FIG. 25 express the same time. Therefore, the rich interval when getting the NOₓ released from the NOₓ absorbent 47 and the rich time when getting the SOₓ released from the NOₓ absorbent 45 are longer than the rich interval for eliminating oxygen poisoning at the exhaust purification catalyst 11 and the rich time for releasing the SOₓ.

FIG. 28 shows the routine for control for feeding a reducing agent from the reducing agent feed valve 13. This routine is executed by interruption every predetermined time interval.

Referring to FIG. 28, first, at step 600, it is judged if a representative temperature TC representing the temperature of the NOₓ storing catalyst 29 and the exhaust purification catalyst is lower than a set temperature Ts, for example, 250°C. When TC<Ts, the routine proceeds to step 601, where the amount W of oxygen poisoning per unit time is calculated from the map shown in FIG. 5(C). Next, at step 602, the amount W of oxygen poisoning W is added to ΣW so as to calculate the cumulative value ΣW of the amount of oxygen poisoning. Next, at step 603, it is judged if the cumulative value ΣW of the amount of oxygen poisoning has exceeded an allowable value WX, that is, if the state is a little before the entire surface of the platinum 51 suffers from oxygen poisoning. When ΣW≤WX, the routine jumps to step 605. As opposed to this, when ΣW>WX, the routine proceeds to step 604, where the poisoning elimination processing is performed, then the routine proceeds to step 605.

At step 605, the value k1·Q of a constant k1 multiplied with the fuel injection amount Q is added to ΣSOX1. This ΣSOX1 expresses the cumulative value of the amount of SOₓ held on the exhaust purification catalyst 11. Next, at step 606, it is judged if the cumulative value ΣSOX1 of the amount of SOₓ has exceeded an allowable value SX1. When ΣSOX1≤SX1, the processing cycle is ended, while when ΣSOX1>SX1, the routine proceeds to step 607, where the SOₓ release processing I is performed.

On the other hand, when it is judged at step 600 that TC≥Ts, the routine proceeds to step 608, where the amount NOXA of NOₓ absorbed per unit time is calculated from the map shown in FIG. 26A, and the NOₓ absorption rate KN shown in FIG. 26B is calculated. Next, at step 609, by adding the actual amount KN-NOXA of NOₓ absorbed to ΣNOX, the cumulative value ΣNOX of the amount of NOₓ absorbed is calculated. Next, at step 610, it is judged if the cumulative value ΣNOX of the amount of NOₓ absorbed has exceeded an allowable value NX. When ΣNOX≤NX, the routine jumps to step 612. As opposed to this, when ΣNOX>NX, the routine proceeds to step 611, where the NOₓ release processing is performed, then the routine proceeds to step 612.

At step 612, the value k2·Q of the constant k2 multiplied with the fuel injection amount Q is added to ΣSOX2. This ΣSOX2 shows the cumulative value of the amount of SOₓ absorbed in the NOₓ absorbent 47. Next, at step 613, it is judged if the cumulative value ΣSOX2 of the amount of SOₓ has exceeded an allowable value SX2. When ΣSOX2≤SX2, the processing cycle is ended. When ΣSOX2>SX2, the routine proceeds to step 614, where the SOₓ release processing II is performed.

FIG. 29 shows the routine for processing for elimination of poisoning executed at step 604 of FIG. 28.

Referring to FIG. 29, first, at step 620, the amount of feed of the reducing agent required for making the air-fuel ratio of the exhaust gas a rich air-fuel ratio of for example about 13 is calculated. Next, at step 621, the feed time of the reducing agent is calculated. This reducing agent feed time is normally 10 seconds or less. Next, at step 622, the feed of the reducing agent from the reducing agent feed valve 13 is started. Next, at step 623, it is judged if the feed time of the reducing agent calculated at step 621 has elapsed. When the feed time of the reducing agent has not elapsed, the routine returns to step 623 again. At this time, the feed of the reducing agent is continued and the air-fuel ratio of the exhaust gas is maintained at the rich air-fuel ratio of about 13. As opposed to this, when the feed time of the reducing agent has elapsed, that is, when the oxygen poisoning of the platinum 51 has been eliminated, the routine proceeds to step 624, where the feed of the reducing agent is stopped, then the routine proceeds to step 625, where the ΣW is cleared. Next, the routine proceeds to step 605 of FIG. 28.

FIG. 30 shows the routine for processing of the SOₓ release processing I executed at step 607 of FIG. 28.

Referring to FIG. 30, first, at step 630, control is performed for raising the temperature of the exhaust purification catalyst 11. That is, the fuel injection pattern from the fuel injector 3 is changed to an injection pattern of any of (II) to (IV) of FIG. 7. If the fuel injection pattern is changed to any injection pattern of (II) to (IV) of FIG. 7, the exhaust gas temperature rises and therefore the temperature of the exhaust purification catalyst 11 rises. Next, the routine proceeds to step 631, where it is judged if the representative temperature TC representing the temperature of the exhaust purification catalyst 11 has reached the SOₓ release temperature TX1 or more. When TC<TX1, the routine returns to step 631 again. As opposed to this, when TC≥TX1, the routine proceeds to step 632, where the amount of feed of the reducing agent required for making the air-fuel ratio of the exhaust gas a rich air-fuel ratio of about 14 is calculated. Next, at step 633, the feed time of the reducing agent is calculated. The feed time of the reducing agent is several minutes. Next, at step 634, the feed of the reducing agent from the reducing agent feed valve 13 is started. Next, at step 635, it is judged if the feed time of the reducing agent calculated at step 633 has elapsed. When the feed time of the reducing agent has not elapsed, the routine returns to step 635. At this time, the feed of the reducing agent is continued and the air-fuel ratio of the exhaust gas is maintained at the rich air-fuel ratio of about 14. As opposed to this, when the feed time of the reducing agent has elapsed, that is, when the release of the SOₓ held in the exhaust purification catalyst 11 has been completed, the routine proceeds to step 636, where the feed of the reducing agent is stopped. Next, at step 637, the action of raising the temperature of the exhaust purification catalyst 11 is stopped, then the routine proceeds to step 638, where the ΣSOX1 and ΣW are cleared.

FIG. 31 shows the routine for processing for release of NOₓ executed at step 611 of FIG. 28.

Referring to FIG. 31, first, at step 640, the amount of feed of the reducing agent required for making the air-fuel ratio of the exhaust gas a rich air-fuel ratio of for example about 13 is calculated. Next, at step 641, the feed time of the reducing agent is calculated. This reducing agent feed time is normally 10 seconds or less. Next, at step 642, the feed of the reducing agent from the reducing agent feed valve 13 is started. Next, at step 643, it is judged if the feed time of the reducing agent calculated at step 641 has elapsed. When the feed time of the reducing agent has not elapsed, the routine returns to step 643. At this time, the feed of the reducing agent is continued and the air-fuel ratio of the exhaust gas is maintained at the rich air-fuel ratio of about 13. As opposed to this, when the feed time of the reducing agent has elapsed, that is, when the action of release of NOₓ from the NOₓ absorbent 47 has been completed, the routine proceeds to step 644, where the feed of the reducing agent is stopped, then the routine proceeds to step 645, where the ΣNOX is cleared. Next, the routine proceeds to step 612 of FIG. 28.

FIG. 32 shows the routine for processing of the SOₓ release processing II executed at step 614 of FIG. 28.

Referring to FIG. 32, first, at step 650, control is performed for raising the temperature of the NOₓ storing catalyst 29. That is, the fuel injection pattern from the fuel injector 3 is changed to an injection pattern of any of (II) to (IV) of FIG. 7. If the fuel injection pattern is changed to any injection pattern of (II) to (IV) of FIG. 7, the exhaust gas temperature rises and therefore the temperature of the NOₓ storing catalyst 29 rises. Next, the routine proceeds to step 651, where it is judged if a representative temperature TC representing the temperature of the NOₓ storing catalyst 29 has reached the SOₓ release temperature TX2 or more. When TC<TX2, the routine returns to step 651. As opposed to this, when TC≥TX2, the routine proceeds to step 652, where the feed amount of the reducing agent required for making the air-fuel ratio of the exhaust gas a rich air-fuel ratio of about 14 is calculated. Next, at step 653, the feed time of the reducing agent is calculated. The feed time of the reducing agent is around 10 minutes. Next, at step 654, the feed of the reducing agent from the reducing agent feed valve 13 is started. Next, at step 655, it is judged if the feed time of the reducing agent calculated at step 653 has elapsed. When the feed time of the reducing agent has not elapsed, the routine returns to step 655. At this time, the feed of the reducing agent is continued and the air-fuel ratio of the exhaust gas is maintained at the rich air-fuel ratio of about 14. As opposed to this, when the feed time of the reducing agent has elapsed, that is, when the release of the SOₓ held in the NOₓ absorbent 47 has been completed, the routine proceeds to step 656, where the feed of the reducing agent is stopped. Next, at step 657, the action of raising the temperature of the NOₓ storing catalyst 29 is stopped, then the routine proceeds to step 658, where the ΣSOX2 and ΣNOX are cleared.

FIG. 33 shows still another embodiment. In this embodiment, as the sensor 22 arranged in the exhaust pipe 21, a NOₓ concentration sensor which can detect the concentration of NOₓ in the exhaust gas is used. This NOₓ concentration sensor 22 generates an output voltage V proportional to the NOₓ concentration. In the exhaust purification catalyst 11, if the oxygen poisoning of the platinum Pt 51 proceeds, the NOₓ purification rate gradually falls and as a result the concentration of NOₓ in the exhaust gas gradually increases. Therefore, in this embodiment, when the amount of oxygen poisoning estimated from the concentration of NOₓ in the exhaust gas has exceeded a predetermined allowable value, that is, when the output voltage V of the NOₓ concentration sensor has exceeded the set value VX1, the air-fuel ratio of the exhaust gas is switched from lean to rich.

Further, with the NOₓ storing catalyst 29, as the amount of NOₓ absorbed of the NOₓ absorbent 47 approaches saturation, the NOₓ purification rate gradually falls and as a result the concentration of NOₓ in the exhaust gas gradually increases. Therefore, the amount of NOₓ absorbed in the NOₓ absorbent 47 can be estimated from the concentration of NOₓ in the exhaust gas. In this embodiment, when the amount of NOₓ absorbed estimated from the concentration of NOₓ in the exhaust gas exceeds a predetermined allowable value, that is, when the output voltage V of the NOₓ concentration sensor 22 has exceeded a set value VX2, the air-fuel ratio of the exhaust gas is switched from lean to rich.

FIG. 33 shows the routine for control for feeding a reducing agent from the reducing agent feed valve 13 in this embodiment. This routine is executed every predetermined time interval.

Referring to FIG. 33, first, at step 700, it is judged if a representative temperature TC representing the temperature of the NOₓ storing catalyst 29 and the exhaust purification catalyst 11 is lower than a set temperature Ts, for example, 250°C. When TC<Ts, the routine returns to step 701 where it is judged if the output voltage V of the NOₓ concentration sensor 22 has exceeded a set value VX1. When V≤VX1, the routine jumps to step 703. As opposed to this, when V>VX1, the routine proceeds to step 702, where the routine for processing for elimination of poisoning is executed, then the routine proceeds to step 703.

At step 703, the value k1·Q of the constant k1 multiplied with the fuel injection amount Q is added to ΣSOX1. This ΣSOX1 expresses the cumulative value of the amount of SOₓ held on the exhaust purification catalyst 11. Next, at step 704, it is judged if the cumulative value ΣSOX1 of the amount of SOₓ has exceeded an allowable value SX1. When ΣSOX1≤SX1, the processing cycle is ended, while when ΣSOX1>SX1, the routine proceeds to step 705, where the SOₓ release processing I shown in FIG. 30 is performed.

On the other hand, when it is judged at step 700 that TC≥Ts, the routine proceeds to step 706, where it is judged if the output voltage V of the NOₓ concentration sensor 22 has exceeded a set value VX2. When V≤VX2, the routine jumps to step 708. As opposed to this, when V>VX2, the routine proceeds to step 707, where the NOₓ release processing shown in FIG. 31 is executed. Next, the routine proceeds to step 708.

At step 708, the value k2·Q of the constant k2 multiplied with the fuel injection amount Q is added to ΣSOX2. This ΣSOX2 expresses the cumulative value of the amount of SOₓ held in the NOₓ absorbent 47. Next, at step 709, it is judged if the cumulative value ΣSOX2 of the amount of SOₓ has exceeded an allowable value SX2. When ΣSOX2≤SX2, the processing cycle is ended, while when ΣSOX2>SX2, the routine proceeds to step 710, where the SOₓ release processing II shown in FIG. 32 is performed.

FIG. 34 and FIG. 35 show still another embodiment. In this embodiment, as the sensor 22 arranged in the exhaust pipe 21, the air-fuel ratio sensor for detecting the air-fuel ratio of the exhaust gas is used. As shown in FIG. 13, when the air-fuel ratio(A/F)out of the exhaust gas flowing out from the exhaust purification catalyst 11 becomes rich after the air-fuel ratio(A/F) in of the exhaust gas flowing into the exhaust purification catalyst 11 is switched from lean to rich, it is judged that the oxygen poisoning of platinum Pt 51 has been eliminated. At this time, the air-fuel ratio of the exhaust gas is switched from rich to lean.

Further, in this embodiment, when the air-fuel ratio of the exhaust gas for releasing the NOₓ from the NOₓ absorbent 47 of the NOₓ storing catalyst 29 is made rich, it is judged if the action of release of NOₓ from the NOₓ absorbent 47 has been completed from the change of the output of the air-fuel ratio sensor 22. When it is judged that the action of release of NOₓ from the NOₓ absorbent 47 has been completed, the air-fuel ratio of the exhaust gas is switched from rich to lean.

Specifically speaking, in this case as well, as shown in FIG. 13, when the air-fuel ratio(A/F)in of the exhaust gas flowing into the NOₓ storing catalyst 29 is switched from lean to rich, that is, when the reducing agent is supplied from the reducing agent feed valve 13, the reducing agent, that is, the hydrocarbon, is used for reducing the NOₓ released from the NOₓ absorbent 47. While the NOₓ is continuing to be released from the NOₓ absorbent 47, the air-fuel ratio(A/F)out of the exhaust gas flowing out from the NOₓ storing catalyst 29 is maintained at substantially the stoichiometric air-fuel ratio or somewhat lean. Next, when NOₓ is no longer released from the NOₓ absorbent 47, the hydrocarbons pass through the NOₓ storing catalyst 29, so the air-fuel ratio(A/F)out of the exhaust gas flowing out from the NOₓ storing catalyst 29 becomes rich. Therefore, when the air-fuel ratio(A/F)out of the exhaust gas flowing out from the NOₓ storing catalyst 29 becomes rich after the air-fuel ratio(A/F)in of the exhaust gas flowing into the NOₓ storing catalyst 29 is switched from lean to rich, it can be judged that the action of release of NOₓ from the NOₓ absorbent 47 has been completed.

The control for feeding the reducing agent in this embodiment is performed using the routine shown in FIG. 28. However, the processing for elimination of poisoning at step 604 in FIG. 28 uses the routine shown in FIG. 34, while the processing for release of NOₓ at step 611 of FIG. 28 uses the routine shown in FIG. 35.

Referring to the routine for processing for elimination of poisoning shown in FIG. 34, first, at step 800, the amount of the reducing agent required for making the air-fuel ratio of the exhaust gas a rich air-fuel ratio of for example about 13 is calculated. Next, the routine proceeds to step 801, where the feed of the reducing agent from the reducing agent feed valve 13 is started. Next, at step 802, it is judged if the air-fuel ratio(A/F)out of the exhaust gas detected by the air-fuel ratio sensor 22 has become rich. When the air-fuel ratio(A/F)out is not rich, the routine returns to step 802. As opposed to this, when the air-fuel ratio(A/F)out is rich, that is, when the oxygen poisoning of the platinum 41 has been eliminated, the routine proceeds to step 803, where the feed of the reducing agent is stopped, then the routine proceeds to step 804, where the ΣW is cleared. Next, the routine proceeds to step 605 of FIG. 28.

On the other hand, referring to the NOₓ release processing routine shown in FIG. 35, first, at step 810, the amount of the reducing agent required for making the air-fuel ratio of the exhaust gas a rich air-fuel ratio of for example about 13 is calculated. Next, the routine proceeds to step 811, where the feed of the reducing agent from the reducing agent feed valve 13 is started. Next, at step 812, it is judged if the air-fuel ratio(A/F)out of the exhaust gas detected by the air-fuel ratio sensor 22 has become rich. When the air-fuel ratio(A/F)out is not rich, the routine returns to step 812. As opposed to this, when the air-fuel ratio(A/F)out is rich, that is, when the action of release of NOₓ from the NOₓ absorbent 47 has been completed, the routine proceeds to step 813, where the feed of the reducing agent is stopped, then the routine proceeds to step 814, where the ΣNOX is cleared. Next, the routine proceeds to step 612 of FIG. 28.

FIG. 36 and FIG. 37 show a further embodiment of the present invention.

As shown in FIG. 36, in this embodiment as well, like in the embodiment shown in FIG. 21, a NOₓ storing catalyst 29 is arranged at the upstream side of the engine exhaust passage, while an exhaust purification catalyst 11 is arranged at the downstream side of the engine exhaust passage. However, in this embodiment, an acidic catalyst 70 such as an oxidation catalyst is arranged at the upstream side of the NOₓ storing catalyst 29. Further, FIG. 36 shows the change of the temperature of the exhaust gas when performing control for raising the temperature to get the SOₓ released from the NOₓ storing catalyst 29 or the exhaust purification catalyst 11 and the strengths of the basicities of the catalysts 70, 29, and 11, that is, the basicity degrees.

As explained above, the basicity of the NOₓ absorbent 47 of the NOₓ storing catalyst 29 is considerably strong, while the basicity of the exhaust purification catalyst 11 is weak. In other words, the basicity degree of the NOₓ storing catalyst 29 is considerably higher than the basicity degree of the exhaust purification catalyst 11. In this case, as explained above, if the basicity degree of the catalyst becomes higher, the holding force of the SOₓ becomes stronger along with this. If the holding force of the SOₓ becomes stronger, the SOₓ will no longer be easily released even if raising the temperature of the catalyst. That is, as shown in FIG. 37, the SOₓ release temperature becomes higher as the basicity degree of the catalyst becomes higher.

On the other hand, the temperature of the exhaust gas at the time of control for raising the temperature for releasing the SOₓ becomes higher at a catalyst positioned at the upstream side than a catalyst positioned at the downstream side. Therefore, if seen from the viewpoint of releasing the SOₓ, it is preferable to arrange the catalyst with a high NOₓ release temperature, that is, the catalyst with a high basicity degree, at the upstream side. That is, seen from the viewpoint of the release of SOₓ, it can be said to be preferable to raise the basicity degree the higher the catalyst bed temperature at the time of control for raising the temperature. In the embodiment shown in FIG. 21 and FIG. 36, if seen from this viewpoint, the order of arrangement of the exhaust purification catalyst 11 and the NOₓ storing catalyst 29 is determined by the strengths of the basicities of the catalysts. The catalyst with a strong basicity, that is, the NOₓ storing catalyst 29, is arranged upstream of the catalyst with a weak basicity, that is, the NOₓ purification catalyst 11.

Note that the temperature raising action of the exhaust gas due to the heat of the oxidation reaction of the unburned HC in the exhaust gas is the most powerful. Therefore, in the embodiment shown in FIG. 36, the acidic catalyst 70 is arranged at the upstream side of the NOₓ storing catalyst 29.

Note that each of the NOₓ storing catalysts 29 shown in FIG. 21 and FIG. 36 may also be comprised of a particulate filter shown in FIG. 15A and FIG. 15B.

In this way, when configuring the NOₓ storing catalyst 29 by a particulate filter, the peripheral walls of the exhaust gas inflow passages 60 and exhaust gas outflow passages 61, that is, the surfaces of the two sides of the partitions 64 and inside walls of the fine holes of the partitions 64 are formed on them with a layer of a catalyst carrier comprised of alumina. As shown in FIG. 22, this catalyst carrier 45 carries a precious metal catalyst 46 and NOₓ absorbent 47 on it. Note that in this case as well, platinum Pt is used as the precious metal catalyst. In this way, even when configuring the NOₓ storing catalyst 29 by a particulate filter, when the air-fuel ratio of the exhaust gas is lean, the NOₓ absorbent 47 absorbs the NOₓ and the SOₓ. Therefore, in this case as well, the control for release of the NOₓ and SOₓ similar to the control for release of the NOₓ and SOₓ for the NOₓ storing catalyst 29 is performed.

Further, when configuring the NOₓ storing catalyst 29 by a particulate filter, the particulate contained in the exhaust gas is trapped in the particulate filter and the trapped particulate is successively made to burn by the heat of the exhaust gas. If a large amount of particulate deposits on the particulate filter, the injection pattern is switched to any one of the injection patterns (II) to (IV) of FIG. 7 or a reducing agent is supplied from the reducing agent feed valve 13 and thereby the exhaust gas temperature is made to rise. Due to this, the deposited particulate is ignited and burned.

FIG. 38 to FIG. 41 show various examples of arrangement of the NOₓ storing catalyst 29 and the exhaust purification catalyst 11.

In the example shown in FIG. 38, the exhaust purification catalyst 11 is arranged at the upstream side of the NOₓ storing catalyst 29. In this case, even when the temperature of the exhaust gas is low, the exhaust purification catalyst 11 can purify the NOₓ. Further, when the exhaust gas is lean, the exhaust purification catalyst 11 converts part of the NO contained in the exhaust gas to NO₂. This NO₂ is easily stored in the NOₓ storing catalyst 29. On the other hand, when feeding a reducing agent from the reducing agent feed valve 13 to make the air-fuel ratio of the exhaust gas rich, this reducing agent is changed to a low molecular weight hydrocarbon in the exhaust purification catalyst 11. Therefore, it is possible to reduce the NOₓ released from the NOₓ absorbent 47 of the NOₓ storing catalyst 29 well.

On the other hand, in the example shown in FIG. 38, the NOₓ storing catalyst 29 may also be comprised of a particulate filter. In this case, the NO₂ produced in the exhaust purification catalyst 11 promotes the oxidation of the particulate deposited on the particulate filter (NO₂+C→CO₂+N₂).

In the example shown in FIG. 39, exhaust purification catalysts 11 are arranged upstream and downstream of the NOₓ storing catalyst 29. In this case, the NOₓ storing catalyst 29 may be formed from a particulate filter.

In the example shown in FIG. 40, an exhaust purification catalyst 11 is arranged downstream of the NOₓ storing catalyst 29 and a monolithic catalyst 71 is arranged upstream of the NOₓ storing catalyst 29. The upstream half of the monolithic catalyst 71 is comprised of the exhaust purification catalyst 11, while the downstream half is comprised of the NOₓ storing catalyst 29. In this example as well, the NOₓ storing catalyst 29 may be formed from a particulate filter.

In the example shown in FIG. 41, a monolithic catalyst 72 is arranged in the engine exhaust passage. The center part of this monolithic catalyst 72 is comprised of the NOₓ storing catalyst 29, while the upstream part and downstream part are comprised of exhaust purification catalysts 11. In this example as well, the NOₓ storing catalyst 29 may be formed from a particulate filter.

Next, a low temperature combustion method suitable for raising the temperature of the exhaust purification catalyst 11 etc. and making the air-fuel ratio of the exhaust gas rich will be explained.

In the compression ignition type internal combustion engine shown in FIG. 1 etc., if increasing the EGR rate (amount of EGR gas/(amount of EGR gas+amount of intake air)), the amount of production of smoke will gradually increase and then peak. If further increasing the EGR rate, the amount of production of smoke will then rapidly drop. This will be explained while referring to FIG. 42 showing the relationship between the EGR rate and the smoke when changing the degree of cooling of the EGR rate. Note that in FIG. 42, the curve A shows the case of powerfully cooling the EGR gas to maintain the temperature of the EGR gas at about 90°C, the curve B shows the case of using a small cooling device to cool the EGR gas, and the curve C shows the case of forcibly cooling the EGR gas.

As shown by the curve A of FIG. 42, when powerfully cooling the EGR gas, the amount of production of smoke peaks when the EGR rate becomes a little lower than 50 percent. In this case, if making the EGR rate about 55 percent or more, almost no smoke will be produced any longer. On the other hand, as shown by the curve B of FIG. 42, when slightly cooling the EGR gas, the amount of production of smoke will peak at an EGR rate slightly higher than 50 percent. In this case, if making the EGR rate about 65 percent or more, almost no smoke will be produced any longer. Further, as shown by the curve C of FIG. 42, when not forcibly cooling the EGR gas, the amount of production of smoke peaks at an EGR rate of near 55 percent. In this case, if making the EGR rate about 70 percent or more, almost no smoke will be produced any more.

Smoke is no longer produced if making the EGR gas rate 55 percent or more in this way because the temperature of the fuel and its surrounding gas at the time of combustion does not become that high due to the heat absorbing action of the EGR gas, that is, low temperature combustion is performed, and as a result the hydrocarbons will not grow to soot.

This low temperature combustion has the feature of enabling the amount of production of NOₓ to be reduced while suppressing the production of smoke regardless of the air-fuel ratio. That is, if the air-fuel ratio is made rich, the fuel becomes in excess, but the combustion temperature is suppressed at a low temperature, so the excess fuel will not grow into soot and therefore no smoke will be generated. Further, at this time, only a very small amount of NOₓ will be generated. On the other hand, even when the average air-fuel ratio is lean or when the air-fuel ratio is the stoichiometric air-fuel ratio, if the combustion temperature becomes high, a small amount of soot will be produced, but in low temperature combustion, the combustion temperature is suppressed to a low temperature, so no smoke at all will be produced and only a very small amount of NOₓ will be produced either.

On the other hand, during this low temperature combustion, the temperature of the fuel and its surrounding gas becomes lower, but the temperature of the exhaust gas rises. This will be explained with reference to FIG. 43A and FIG. 43B.

The solid line of FIG. 43A shows the relationship between the average gas temperature Tg in the combustion chamber 5 and the crank angle at the time of low temperature combustion, while the broken line of FIG. 43A shows the relationship between the average gas temperature Tg in the combustion chamber 5 and the crank angle at the time of normal combustion. Further, the solid line of FIG. 43B shows the relationship between the temperature Tf of the fuel and its surrounding gas and the crank angle at the time of low temperature combustion, while the broken line of FIG. 43B shows the relationship between the temperature Tf of the fuel and its surrounding gas and the crank angle at the time of normal combustion.

During low temperature combustion, the amount of EGR is greater than during normal combustion. Therefore, as shown in FIG. 43A, before compression top dead center, that is, during the compression stroke, the average gas temperature Tg at the time of low temperature combustion shown by the solid line becomes higher than the average gas temperature Tg at the time of normal combustion shown by the broken line. Note that at this time, as shown FIG. 43B, the temperature Tf of the fuel and its surrounding gas becomes substantially the same temperature as the average gas temperature Tg.

Next, the fuel starts to be burned near compression top dead center, but in this case, when low temperature combustion is performed, as shown by the solid line of FIG. 43B, the temperature Tf of the fuel and its surrounding gas does not become that much higher due to the heat absorbing action of the EGR gas. As opposed to this, during normal combustion, there is a large amount of oxygen around the fuel, so as shown by the broken line in FIG. 43B, the temperature Tf of the fuel and its surrounding gas becomes extremely high. In this way, during normal combustion, the temperature Tf of the fuel and its surrounding gas becomes considerably higher than the case of low temperature combustion, but temperature of the other gas, which accounts for the majority of the gas, becomes lower at the time of normal combustion compared with low temperature combustion. Therefore, as shown in FIG. 43A, the average gas temperature Tg in a combustion chamber 2 near compression top dead center becomes higher during low temperature combustion than normal combustion. As a result, as shown in FIG. 43A, the temperature of the burnt gas in the combustion chamber 2 after the combustion has been completed becomes higher during low temperature combustion than normal combustion. Consequently, if performing low temperature combustion, the temperature of the exhaust gas becomes higher.

However, if the required torque TQ of the engine becomes high, that is, if the fuel injection amount becomes greater, the temperature of the fuel and the surrounding gas at the time of the combustion becomes higher, so low temperature combustion becomes difficult. That is, low temperature combustion is only possible at the time of engine medium and low load operation where the amount of heat generated due to combustion is relatively small. In FIG. 44, the region I shows the operating region where first combustion where the amount of inert gas of the combustion chamber 5 is larger than the amount of inert gas where the amount of generation of soot peaks, that is, low temperature combustion, can be performed, while the region II shows the operating region where only second combustion where the amount of inert gas in the combustion chamber is smaller than the amount of inert gas where the amount of generation of soot peaks, that is, normal combustion is possible.

FIG. 45 shows the target air-fuel ratio A/F in the case of low temperature combustion in the operating region I, while FIG. 46 shows the opening degree of the throttle valve 9, the opening degree of the EGR control valve 15, the EGR rate, the air-fuel ratio, the injection start timing θS, the injection end timing θE, and the injection amount in accordance with the required torque TQ in the case of low temperature combustion in the operating region I. Note that FIG. 46 also shows the opening degree of the throttle valve 9 at the time of normal combustion performed in the operating region II.

From FIG. 45 and FIG. 46, it is learned that at the time of low temperature combustion in the operating region I, the EGR rate is made 55 percent or more and the air-fuel ratio A/F is made a lean air-fuel ratio of 15.5 to 18 or so. Note that as explained above, at the time of low temperature combustion in the operating region I, even if the air-fuel ratio is made rich, almost no smoke is generated.

In this way, at the time of low temperature combustion, it is possible to make the air-fuel ratio rich without causing almost any generation of smoke. Therefore, when the air-fuel ratio of the exhaust gas should be made rich to eliminate oxygen poisoning or release SOₓ, it is possible to perform low temperature combustion and make the air-fuel ratio rich under low temperature combustion.

Further, as explained above, if performing low temperature combustion, the exhaust gas temperature rises. Therefore, to release SOₓ or make the deposited particulate ignite and burn, it is also possible to perform the low temperature combustion when the exhaust gas temperature should be raised.

As explained above, according to the present invention, a high NOₓ purification rate can be obtained.

## Claims

1. An exhaust purification device for an internal combustion engine (1) designed to purify NOₓ generated when burning fuel under a lean air-fuel ratio by an exhaust purification catalyst (11) arranged in an exhaust passage (21), said exhaust purification catalyst (11) comprising a catalyst carrier (50) having base points exhibiting basicity on the carrier surface, the catalyst carrier further carrying a precious metal catalyst (51) dispersed on the carrier surface, wherein the exhaust purification device further comprises an electronic control unit (30) for controlling means (13) for temporarily switching the air-fuel ratio of the exhaust gas flowing into the exhaust purification catalyst (11) from lean to rich before the entire surface of the precious metal catalyst (51) suffers from oxygen poisoning,
**characterized in that**
no layer of a NOₓ absorbent able to absorb NOₓ is formed on the carrier surface.

2. An exhaust purification device for an internal combustion engine as set forth in claim 1, wherein said catalyst carrier (50) is comprised of alumina.

3. An exhaust purification device for an internal combustion engine as set forth in claim 2, wherein said catalyst carrier (50) is made to contain inside it an alkali metal, an alkali earth metal, of rare earth (52) so as to increase the number of base points on the catalyst carrier surface of strengthen the basicity at the base points.

4. An exhaust purification device for an internal combustion engine as set forth in claim 1, wherein said precious metal catalyst (51) is platinum.

5. An exhaust purification device for an internal combustion engine as set forth in claim 1, wherein the oxygen poisoning of the precious metal catalyst (51) is continuously eliminated by the air-fuel ratio of the exhaust gas being repeatedly switched from lean to rich and wherein the ratio of a rich time to a lean time at this time is set to a ratio giving a NOₓ purification rate of 90 percent or more when the temperature (TC) of the exhaust purification catalyst (11) is 200° to 250°.

6. An exhaust purification device for an internal combustion engine as set forth in claim 1, wherein the oxygen poisoning of the precious metal catalyst (51) is continuously eliminated by the air-fuel ratio of the exhaust gas being repeatedly switched from lean to rich and wherein the action of switching the air-fuel ratio from lean to rich is prohibited when the temperature (TC) of the exhaust purification catalyst (11) is an allowable temperature of more.

7. An exhaust purification device for an internal combustion engine as set forth in claim 1, wherein said device is further provided with means (30) for calculating an amount of oxygen poisoning (W) of the precious metal catalyst (51) and wherein the air-fuel ratio of the exhaust gas is switched from lean to rich when the calculated or estimated amount of oxygen poisoning (W) exceeds a predetermined allowable value (WX).

8. An exhaust purification device for an internal combustion engine as set forth in claim 7, wherein said device is further provided with a NOₓ concentration sensor (22) for detecting the concentration of NOx in exhaust gas flowing out from the exhaust purification catalyst (11) and wherein it is judged that the amount of oxygen poisoning (W) of the precious metal catalyst (51) has exceeded the allowable value (WX) when the concentration of NOx detected by the NOx concentration sensor (22) has exceeded a set value (VX) .

9. An exhaust purification device for an internal combustion engine as set forth in claim 1, wherein said device is further provided with means (30) for judging if the oxygen poisoning of the precious metal catalyst (51) has been eliminated and wherein the air-fuel ratio of the exhaust gas is switched from rich to lean when it is judged that the oxygen poisoning of the precious metal catalyst (51) has been eliminated.

10. An exhaust purification device for an internal combustion engine as set forth in claim 9, wherein said device is further provided with an air-fuel ratio sensor (22) for detecting an air-fuel ratio of the exhaust gas flowing our from the exhaust purification catalyst (11) and wherein it is judged that oxygen poisoning of the precious metal catalyst (51) has been eliminated when the air-fuel ratio of the exhaust gas flowing out from the exhaust purification catalyst (11) becomes rich after the air-fuel ratio of the exhaust gas flowing into the exhaust purification catalyst (51) is switched from lean to rich.

11. An exhaust purification device for an internal combustion engine as set forth in claim 1, wherein the NOₓ and SOₓ contained in the exhaust gas are oxidized by the precious metal catalyst (51) in the exhaust purification catalyst (11), then held on the catalyst carrier (50).

12. An exhaust purification device for an internal combustion engine as set forth in claim 11, wherein the NOₓ held on the catalyst carrier (50) is released from the catalyst carrier (50) and reduced when the air-fuel ratio of the exhaust gas flowing into the exhaust purification catalyst (11) is temporarily switched from lean to rich to eliminate the oxygen poisoning of the precious metal catalyst (51).

13. An exhaust purification device for an internal combustion engine as set forth in claim 11, wherein the strength of the basicity of the surface of the catalyst carrier (50) is set to a strength by which the SOₓ is held on the surface of the catalyst carrier (50) in the form of sulfate ions.

14. An exhaust purification device for an internal combustion engine as set forth in claim 13, wherein when getting the SOₓ held on the surface of the catalyst carrier (50) released from the surface of the catalyst carrier (50), the temperature (TC) of the exhaust purification catalyst (11) is made to rise to the SOₓ release temperature (TX), then the air-fuel ratio of the exhaust gas is made rich while the temperature (TC) of the exhaust purification catalyst (11) is maintained at the SOₓ release temperature (TX), and the SOₓ release temperature (TX) is about 500°C to 550°C.

15. An exhaust purification device for an internal combustion engine as set forth in claim 1, wherein a particulate filter (11) is arranged in the engine exhaust passage instead of said exhaust purification catalyst (11) and the catalyst carrier is coated on the particulate filter (64).

16. An exhaust purification device for an internal combustion engine as set forth in claim 1, wherein a particulate filter (11) is arranged in the engine exhaust passage (21) and said exhaust purification catalyst (11) is arranged in the exhaust passage (21) upstream or downstream of the particulate filter (11).

17. An exhaust purification device for an internal combustion engine as set forth in claim 1, wherein the engine exhaust passage (21) has arranged in it a NOₓ selective reducing catalyst (23) having the function of selectively reducing the NOₓ and not having the function of absorbing NOₓ and wherein said exhaust purification catalyst (11) is arranged in the exhaust passage (21) upstream or downstream of said NOₓ selective reducing catalyst (23) .

18. An exhaust purification device for an internal combustion engine as set forth in claim 17, wherein the exhaust purification catalyst (11) is arranged in the exhaust passage (21) upstream of the NOₓ selective reducing catalyst (23), a urea feed valve (25) for feeding a urea aqueous solution is provided in the exhaust passage (21) between the NOₓ selective reducing catalyst (23) and exhaust purification catalyst (11), the air-fuel ratio of the exhaust gas is repeatedly switched from lean to rich when a high NOₓpurification rate is obtained by the exhaust purification catalyst (11), and the urea aqueous solution is fed from the urea feed valve (25) when a high NOₓ purification rate is obtained by the NOₓ selective reducing catalyst (23).

19. An exhaust purification device for an internal combustion engine as set forth in claim 1, wherein a NOx storing catalyst (29), forming on the surface of the carrier (45) a layer of a NOₓ absorbent (47) able to absorb NOx under a lean air-fuel ratio and carrying a precious metal catalyst (46) dispersed on it, is arranged in the engine exhaust passage (43) in series with said exhaust purification catalyst (11), the air-fuel ratio of the exhaust gas flowing into the exhaust purification catalyst (11) is temporarily switched from lean to rich before the entire surface of the precious metal catalyst (51) carried on the carrier surface of the exhaust purification catalyst (11) suffers from oxygen poisoning when the NOx in the exhaust gas is mainly being purified by the exhaust purification catalyst (11), and the air-fuel ratio of the exhaust gas flowing into the NOₓ storing catalyst (29) is temporarily switched from lean to rich before the NOx storing capability of the NOₓ storing catalyst (29) becomes saturated when the NOₓ in the exhaust gas is mainly being purified by the NOₓ storing catalyst (29).

20. An exhaust purification device for an internal combustion engine as set forth in claim 19, wherein the NOₓ in the exhaust gas is mainly purified by the exhaust purification catalyst (11) when a temperature of the exhaust purification catalyst (TC) is in a first temperature region, and the NOₓ in the exhaust gas is mainly purified by the NOₓ storing catalysts (29) when a temperature of the NOₓ storing catalyst is in a second temperature region at a side higher than said first temperature region.

21. An exhaust purification device for an internal combustion engine as set forth in claim 20, wherein it is judged that the temperature of the exhaust purification catalyst (11) is in the first temperature range when a representative temperature (TC) representing the temperature of the exhaust purification catalyst (11) and the temperature of the NOₓ storing catalyst (29) is lower than a predetermined set temperature (TS), it is judged that the temperature of the NOₓ storing catalyst (29) is in the second temperature range when said representative temperature (TC) is higher then the predetermined set temperature (TS), the air-fuel ratio of the exhaust gas flowing into the exhaust purification catalyst (11) is temporarily switched from lean to rich before the entire surface of the precious metal catalyst (51) carried on the carrier surface of the exhaust purification catalyst (11) suffers from oxygen poisoning when it is judged that the temperature of the exhaust purification catalyst (29) is in the first temperature region, and the air-fuel ratio of the exhaust gas flowing into the NOₓ storing catalyst is temporarily switched from lean to rich before the NOx storing capability of the NOₓ storing catalyst (29) becomes saturated when it is judged that the temperature of the NOx storing catalyst (29) is in the second temperature region.

22. An exhaust purification device for an internal combustion engine as set forth in claim 21, wherein the NOₓ absorbent (47) carried on the surface of the carrier (45) of the NOₓ storing catalyst (29) is comprised of an alkali metal, an alkali earth metal, or a rare earth.

23. An exhaust purification device for an internal combustion engine as set forth in claim 19, wherein the NOₓ and SOₓ contained in the exhaust gas are absorbed in the NOₓ absorbent (47) carried on the surface of the carrier (45) of the NOₓ storing catalyst (29) under a lean air-fuel ratio.

24. An exhaust purification device for an internal combustion engine as set forth in claim 23, wherein the device is provided with means (30) for calculating an amount (NOXA) of NOₓ absorbed in the NOx absorbent (47) and wherein the air-fuel ratio of the exhaust gas is switched from lean to rich when the calculated or estimated amount (NOXA) of NOₓ absorbed exceeds a predetermined allowable value (NX) .

25. An exhaust purification device for an internal combustion engine as set forth in claims 23, wherein said device is further provided with a NOₓ concentration sensor (22) for detecting the concentration of NOₓ in exhaust gas flowing out from the NOₓ storing catalyst (29) and wherein it is judged that the amount of NOₓ (NOXA) absorbed of the NOₓ absorbent (47) has exceeded the allowable value when the concentration of NOₓ detected by the NOₓ concentration sensor (22) has exceed a set value (NX).

26. An exhaust purification device for an internal combustion engine as set forth in claim 23, when getting the SOₓ absorbed in the NOx absorbent (47) of the NOₓ storing catalyst (29) released from the NOₓ absorbent, the temperature of the NOₓ storing catalyst (29) is made to rise to the SOₓ release temperature, then the air-fuel ratio of the exhaust gas is made rich while the temperature of the NOₓ storing catalyst (29) is maintained at the SOₓ release temperature (TX1), and the SOₓ release temperature (TX1) is about 600°C or more.

27. An exhaust purification device for an internal combustion engine as set forth in claim 19, wherein the order of arrangement of the exhaust purification catalyst (11) and the NOₓ storing catalyst (29) is determined in accordance with the strength of the basicity of the catalyst (11, 29) and the catalyst (11, 29) with the stronger basicity is arranged at the upstream said of the catalyst (11, 29) with the weaker basicity.

28. An exhaust purification device for an internal combustion engine as set forth in claims 19 or 27, wherein the NOₓ storing catalyst (29) is arranged at the upstream side of the exhaust purification catalyst (11).

29. An exhaust purification device for an internal combustion engine as set forth in claim 28, wherein an acidic catalyst (70) is arranged at an upstream side of the NOₓ storing catalyst (29).

30. An exhaust purification device for an internal combustion engine as set forth in claim 19, wherein the NOₓ storing catalyst (29) is arranged downstream of the exhaust purification catalyst (11).

31. An exhaust purification device for an internal combustion engine as set forth in claim 19, wherein exhaust purification catalysts (11) are arranged upstream and downstream of the NOₓ storing catalyst (29).

32. An exhaust purification device for an internal combustion engine as set forth in claims 28, 30 or 31, wherein the NOₓ storing catalyst (29) is comprised of a particulate filter.

33. An exhaust purification device for an internal combustion engine as set forth in claim 1, wherein a reducing agent is fed into the engine exhaust passage (21) to make the air-fuel ratio of the exhaust gas rich.

34. An exhaust purification device for an internal combustion engine as set forth in claim 1, wherein the engine (1) is an engine which gradually increases in amount of generation of soot and reaches a peak when increasing the amount of exhaust gas recirculation and no longer generates almost any soot when further increasing the amount of exhaust gas recirculation and wherein the air-fuel ratio of the exhaust gas is made rich by making the air-fuel ratio in the combustion chamber (2) rich in the state where the amount of exhaust gas recirculation is increased over the amount where the amount of generation of soot peaks.

35. An exhaust purification device for an internal combustion engine as set forth in claim 1, wherein the engine (1) is an engine which gradually increases in amount of generation of soot and reaches a peak when increasing the amount of exhaust gas recirculation and no longer generates almost any soot when further increasing the amount of exhaust gas recirculation and wherein the amount of exhaust gas recirculation is increased over the amount where the amount of generation of soot peaks when the temperature of the exhaust purification catalyst (11) should be raised.

## Patentansprüche

1. Abgasreinigungsvorrichtung für eine Brennkraftmaschine (1), die so ausgebildet ist, dass sie NOₓ, das bei der Verbrennung von Kraftstoff unter einem mageren Luft-Kraftstoff-Verhältnis erzeugt wird, durch einen Abgasreinigungskatalysator (11) entfernt, der in einem Abgaskanal (21) angeordnet ist, wobei der Abgasreinigungskatalysator (11) einen Katalysatorträger (50) aufweist, der Basenpunkte besitzt, die Basizität auf der Trägeroberfläche aufweisen, und der Katalysatorträger des weiteren einen Edelmetallkatalysator (51) trägt, der auf der Trägeroberfläche dispergiert ist, wobei die Abgasreinigungsvorrichtung des weiteren eine elektronische Steuereinheit (13) zum Steuern von Einrichtungen (13) zum zeitweisen Umschalten des Luft-Kraftstoff-Verhältnisses des in den Abgasreinigungskatalysator (11) strömenden Abgases von mager auf fett, bevor die gesamte Oberfläche des Edelmetallkatalysators (51) unter einer Sauerstoffvergiftung leidet, aufweist,
**dadurch gekennzeichnet, dass** keine Schicht aus einem NOₓ-Absorptionsmittel, das NOₓ absorbieren kann, auf der Trägeroberfläche ausgebildet ist.

2. Abgasreinigungsvorrichtung für eine Brennkraftmaschine nach Anspruch 1, bei der der Katalysatorträger (50) Aluminiumoxid umfasst.

3. Abgasreinigungsvorrichtung für eine Brennkraftmaschine nach Anspruch 2, bei der der Katalysatorträger (50) in seinem Inneren ein Alkalimetall, Erdalkalimetall oder Seltenerdmetall (52) enthält, um die Anzahl der Basenpunkte auf der Katalysatorträgeroberfläche zu erhöhen und die Basizität an den Basenpunkten zu stärken.

4. Abgasreinigungsvorrichtung für eine Brennkraftmaschine nach Anspruch 1, bei der der Edelmetallkatalysator (51) aus Platin besteht.

5. Abgasreinigungsvorrichtung für eine Brennkraftmaschine nach Anspruch 1, bei der die Sauerstoffvergiftung des Edelmetallkatalysators (51) kontinuierlich eliminiert wird, indem das Luft-Kraftstoff-Verhältnis des Abgases auf wiederholte Weise von mager auf fett umgeschaltet wird, und bei der das Verhältnis zwischen der Fettzeit und der Magerzeit zu dieser Zeit auf einen Wert eingestellt wird, der eine NOₓ-Reinigungsrate von 90 % oder mehr liefert, wenn die Temperatur (TC) des Abgasreinigungskatalysators (11) 200° bis 250° beträgt.

6. Abgasreinigungsvorrichtung für eine Brennkraftmaschine nach Anspruch 1, bei der die Sauerstoffvergiftung des Edelmetallkatalysators (51) kontinuierlich eliminiert wird, indem das Luft-Kraftstoff-Verhältnis des Abgases auf wiederholte Weise von mager auf fett umgeschaltet wird, und bei der der Vorgang des Umschaltens des Luft-Kraftstoff-Verhältnisses von mager auf fett verboten wird, wenn die Temperatur (TC) des Abgasreinigungskatalysators (11) einer zulässigen Temperatur oder mehr entspricht.

7. Abgasreinigungsvorrichtung für eine Brennkraftmaschine nach Anspruch 1, bei der die Vorrichtung des weiteren mit Einrichtungen (30) zum Berechnen der Menge der Sauerstoffvergiftung (W) des Edelmetallkatalysators (51) versehen ist und bei der das Luft-Kraftstoff-Verhältnis des Abgases von mager auf fett umgeschaltet wird, wenn die berechnete oder geschätzte Menge der Sauerstoffvergiftung (W) einen vorgegebenen zulässigen Wert (WX) übersteigt.

8. Abgasreinigungsvorrichtung für eine Brennkraftmaschine nach Anspruch 7, bei der die Vorrichtung des weiteren mit einem NOₓ-Konzentrationssensor (22) zum Detektieren der Konzentration des NOₓ im Abgas, das aus dem Abgasreinigungskatalysator (11) strömt, versehen ist und bei der entschieden wird, dass die Menge der Sauerstoffvergiftung (W) des Edelmetallkatalysators (51) den zulässigen Wert (WX) überschritten hat, wenn die vom NOₓ-Konzentrationssensors (22) detektierte NOₓ-Konzentration einen Sollwert (VX) überschritten hat.

9. Abgasreinigungsvorrichtung für eine Brennkraftmaschine nach Anspruch 1, bei der die Vorrichtung des weiteren mit Einrichtungen (30) zum Entscheiden, ob die Sauerstoffvergiftung des Edelmetallkatalysators (51) eliminiert worden ist, versehen ist und wobei das Luft-Kraftstoff-Verhältnis des Abgases von fett auf mager umgeschaltet wird, wenn entschieden wird, dass die Sauerstoffvergiftung des Edelmetallkatalysators (51) eliminiert worden ist.

10. Abgasreinigungsvorrichtung für eine Brennkraftmaschine nach Anspruch 9, bei der die Vorrichtung des weiteren mit einem Luft-Kraftstoff-VerhältnisSensor (22) zum Detektieren des Luft-Kraftstoff-Verhältnisses des aus dem Abgasreinigungskatalysator (11) strömenden Abgases versehen ist und bei der entschieden wird, dass die Sauerstoffvergiftung des Edelmetallkatalysators (51) eliminiert worden ist, wenn das Luft-Kraftstoff-Verhältnis des aus dem Abgasreinigungskatalysator (11) strömenden Abgases fett wird, nachdem das Luft-Kraftstoff-Verhältnis des in den Abgasreinigungskatalysator (51) strömenden Abgases von mager auf fett umgeschaltet wurde.

11. Abgasreinigungsvorrichtung für eine Brennkraftmaschine nach Anspruch 1, bei der das im Abgas enthaltene NOₓ und SOₓ durch den Edelmetallkatalysator (51) im Abgasreinigungskatalysator (11) oxidiert und dann auf dem Katalysatorträger (50) gehalten werden.

12. Abgasreinigungsvorrichtung für eine Brennkraftmaschine nach Anspruch 11, bei der das auf dem Katalysatorträger (50) gehaltene NOₓ vom Katalysatorträger (50) freigesetzt und reduziert wird, wenn das Luft-Kraftstoff-Verhältnis des in den Abgasreinigungskatalysator (11) strömenden Abgases zeitweise von mager auf fett umgeschaltet wird, um die Sauerstoffvergiftung des Edelmetallkatalysators (51) zu eliminieren.

13. Abgasreinigungsvorrichtung für eine Brennkraftmaschine nach Anspruch 11, bei der die Stärke der Basizität der Oberfläche des Katalysatorträgers (50) auf einen Wert eingestellt wird, bei dem das SOₓ auf der Oberfläche des Katalysatorträgers (50) in der Form von Sulfationen gehalten wird.

14. Abgasreinigungsvorrichtung für eine Brennkraftmaschine nach Anspruch 13, bei der beim Freisetzen des auf der Oberfläche des Katalysatorträgers (50) gehaltenen SOₓ von der Oberlfäche des Katalysatorträgers (50) die Temperatur (TC) des Abgasreinigungskatalysators (11) auf die SOₓ-Freisetzungstemperatur (TX) erhöht wird und dann das Luft-Kraftstoff-Verhältnis des Abgases fett gemacht wird, während die Temperatur (TC) des Abgasreinigungskatalysators (11) auf der SOₓ-Freisetzungstemperatur (TX) gehalten wird, wobei die SOₓ-Freisetzungstemperatur (TX) etwa 500°C bis 550 °C beträgt.

15. Abgasreinigungsvorrichtung für eine Brennkraftmaschine nach Anspruch 1, bei der ein Partikelfilter (11) im Abgaskanal der Brennkraftmaschine anstelle des Abgasreinigungskatalysators (11) angeordnet ist und der Partikelfilter (64) mit dem Katalysatorträger beschichtet ist.

16. Abgasreinigungsvorrichtung für eine Brennkraftmaschine nach Anspruch 1, bei der ein Partikelfilter (11) im Abgaskanal (21) der Brennkraftmaschine angeordnet ist und der Abgasreinigungskatalysator (11) im Abgaskanal (21) aufstromseitig oder abstromseitig des Partikelfilters (11) angeordnet ist.

17. Abgasreinigungsvorrichtung für eine Brennkraftmaschine nach Anspruch 1, bei der im Abgaskanal (21) der Brennkraftmaschine ein NOₓ selektiv reduzierender Katalysator (23) angeordnet ist, der das NOₓ selektiv reduziert und kein NOₓ absorbiert, und bei der der Abgasreinigungskatalysator (11) im Abgaskanal (21) aufstromseitig oder abstromseitig des NOₓ selektiv reduzierenden Katalysators (23) angeordnet ist.

18. Abgasreinigungsvorrichtung für eine Brennkraftmaschine nach Anspruch 17, bei der der Abgasreinigungskatalysator (11) im Abgaskanal (21) aufstromseitig des NOₓ selektiv reduzierenden Katalysators (23) angeordnet ist, ein Harnstoffzuführventil (25) zum Zuführen einer wässrigen Harnstofflösung im Abgaskanal (21) zwischen dem NOₓ selektiv reduzierenden Katalysator (23) und dem Abgasreinigungskatalysator (11) vorgesehen ist, das Luft-Kraftstoff-Verhältnis des Abgases auf wiederholte Weise von mager auf fett umgeschaltet wird, wenn eine hohe NOₓ-Reinigungsrate vom Abgasreinigungskatalysator (11) erhalten wird, und die wässrige Harnstofflösung vom Harnstoffzuführventil (25) zugeführt wird, wenn eine hohe NOₓ-Reinigungsrate vom NOₓ selektiv reduzierenden Katalysator (23) erhalten wird.

19. Abgasreinigungsvorrichtung für eine Brennkraftmaschine nach Anspruch 1, bei der ein NOₓ-Speicherkatalysator (29), der auf der Oberfläche des Trägers (45) eine Schicht aus einem NOₓ-Absorptionsmittel (47) bildet, die NOₓ unter einem mageren Luft-Kraftstoff-Verhältnis absorbieren kann und einen hierauf dispergierten Edelmetallkatalysator (46) trägt, im Abgaskanal (43) der Brennkraftmaschine in Reihe mit dem Abgasreinigungskatalysator (11) angeordnet ist, das Luft-Kraftstoff-Verhältnis des in den Abgasreinigungskatalysator (11) strömenden Abgases zeitweise von mager auf fett umgeschaltet wird, bevor die gesamte Oberfläche des auf der Trägeroberfläche des Abgasreinigungskatalysators (11) getragenen Edelmetallkatalysators (51) unter einer Sauerstoffvergiftung leidet, wenn das im Abgas enthaltende NOₓ hauptsächlich durch den Abgasreinigungskatalysator (11) gereinigt wird, und das Luft-Kraftstoff-Verhältnis des in den NOₓ-Speicherkatalysator (29) strömenden Abgases zeitweise von mager auf fett umgeschaltet wird, bevor die NOx-Speicherfähigkeit des NOₓ-Speicherkatalysators (29) gesättigt wird, wenn das NOₓ im Abgas hauptsächlich durch den NOₓ-Speicherkatalysator (29) gereinigt wird.

20. Abgasreinigungsvorrichtung für eine Brennkraftmaschine nach Anspruch 19, bei der das NOₓ im Abgas hauptsächlich durch den Abgasreinigungskatalysator (11) gereinigt wird, wenn sich die Temperatur des Abgasreinigungskatalysators (TC) in einem ersten Temperaturbereich befindet, und das NOₓ im Abgas hauptsächlich vom NOₓ-Speicherkatalysator (29) gereinigt wird, wenn sich die Temperatur des NOₓ-Speicherkatalysators in einem zweiten Temperaturbereich, der höher ist als der erste Temperaturbereich, befindet.

21. Abgasreinigungsvorrichtung für eine Brennkraftmaschine nach Anspruch 20, bei der entschieden wird, dass die Temperatur des Abgasreinigungskatalysators (11) im ersten Temperaturbereich liegt, wenn eine repräsentative Temperatur (TC), die die Temperatur des Abgasreinigungskatalysators (11) und die Temperatur des NOₓ-Speicherkatalysators (29) repräsentiert, geringer ist als eine vorgegebene Solltemperatur (TS), bei dem entschieden wird, dass sich die Temperatur des NOₓ-Speicherkatalysators (29) im zweiten Temperaturbereich befindet, wenn die repräsentative Temperatur (TC) höher ist als die vorgegebene Solltemperatur (TS), das Luft-Kraftstoff-Verhältnis des in den Abgasreinigungskatalysator (11) strömenden Abgases zeitweise von mager auf fett umgeschaltet wird, bevor die gesamte Oberfläche des Edelmetallkatalysators (51), der auf der Trägeroberfläche des Abgasreinigungskatalysators (11) getragen wird, unter einer Sauerstoffvergiftung leidet, wenn entschieden wird, dass die Temperatur des Abgasreinigungskatalysators (29) im ersten Temperaturbereich liegt, und das Luft-Kraftstoff-Verhältnis des in den NOₓ-Speicherkatalysator strömenden Abgases zeitweise von mager auf fett umgeschaltet wird, bevor das NOx-Speichervermögen des NOₓ-Speicherkatalysators (29) gesättigt wird, wenn entschieden wird, dass die Temperatur des NOₓ-Speicherkatalysators (29) im zweiten Temperaturbereich liegt.

22. Abgasreinigungsvorrichtung für eine Brennkraftmaschine nach Anspruch 21, bei der das auf der Oberfläche des Trägers (45) des NOₓ-Speicherkatalysators (29) getragene NOₓ-Absorptionsmittel (47) ein Alkalimetall, ein Erdalkalimetall oder ein Seltenerdmetall umfasst.

23. Abgasreinigungsvorrichtung für eine Brennkraftmaschine nach Anspruch 19, bei der das im Abgas enthaltene NOₓ und SOₓ im NOₓ-Absorptionsmittel (47), das auf der Oberfläche des Trägers (45) des NOₓ-Speicherkatalysators (29) getragen wird, unter einem mageren Luft-Kraftstoff-Verhältnis absorbiert werden.

24. Abgasreinigungsvorrichtung für eine Brennkraftmaschine nach Anspruch 23, bei der die Vorrichtung mit Einrichtungen (30) zum Berechnen der Menge (NOXA) des im NOₓ-Absorptionsmittel 47 absorbierten NOₓ versehen ist und bei der das Luft-Kraftstoff-Verhältnis des Abgases von mager auf fett umgeschaltet wird, wenn die berechnete oder geschätzte Menge (NOXA) des absorbierten NOₓ einen vorgegebenen zulässigen Wert (NX) überschreitet.

25. Abgasreinigungsvorrichtung für eine Brennkraftmaschine nach Anspruch 23, bei der die Vorrichtung des weiteren mit einem NOₓ-Konzentrationssensor (22) zum Detektieren der Konzentration von NOₓ im Abgas, das aus dem NOₓ-Speichekatalysator (29) strömt, versehen ist und bei der entschieden wird, dass die vom NOₓ-Absorptionsmittel (47) absorbierte Menge an NOₓ (NOXA) den zulässigen Wert überschritten hat, wenn die Konzentration des vom NOₓ-Konzentrationssensor (22) detektierten NOₓ einen Sollwert (NX) überschritten hat.

26. Abgasreinigungsvorrichtung für eine Brennkraftmaschine nach Anspruch 23, bei der beim Freisetzen des im NOₓ-Absorptionsmittel (47) des NOₓ-Speicherkatalysators (29) absorbierten SOₓ vom NOₓ-Absorptionsmittel die Temperatur des NOₓ-Speicherkatalysators (29) auf die SOₓ-Freisetzungstemperatur erhöht wird und dann das Luft-Kraftstoff-Verhältnis des Abgases fett gemacht wird, während die Temperatur des NOₓ-Speicherkatalysators (29) auf der SOₓ-Freisetzungstemperatur (TX1) gehalten wird, wobei die SOₓ-Freisetzungstemperatur (TX1) etwa 600 °C oder mehr beträgt.

27. Abgasreinigungsvorrichtung für eine Brennkraftmaschine nach Anspruch 19, bei der die Reihenfolge der Anordnung des Abgasreinigungskatalysators (11) und des NOₓ-Speicherkatalysators (29) in Abhängigkeit von der Stärke der Basizität des Katalysators (11, 29) und des Katalysators (11, 29) festgelegt wird, wobei die stärkere Basizität aufstromseitig des Katalysators (11, 29) mit der schwächeren Basizität angeordnet wird.

28. Abgasreinigungsvorrichtung für eine Brennkraftmaschine nach Anspruch 19 oder 27, bei der der NOₓ-Speicherkatalysator (29) aufstromseitig des Abgasreinigungskatalysators (11) angeordnet ist.

29. Abgasreinigungsvorrichtung für eine Brennkraftmaschine nach Anspruch 28, bei der ein Säurekatalysator (70) aufstromseitig des NOₓ-Speichekatalysators (29) angeordnet ist.

30. Abgasreinigungsvorrichtung für eine Brennkraftmaschine nach Anspruch 19, bei der der NOₓ-Speicherkatalysator (29) abstromseitig des Abgasreinigungskatalysators (11) angeordnet ist.

31. Abgasreinigungsvorrichtung für eine Brennkraftmaschine nach Anspruch 19, bei der Abgasreinigungskatalysatoren (11) aufstromseitig und abstromseitig des NOₓ-Speicherkatalysators (29) angeordnet sind.

32. Abgasreinigungsvorrichtung für eine Brennkraftmaschine nach Anspruch 28, 30 oder 31, bei der der NOₓ-Speicherkatalysator (29) einen Partikelfilter umfasst.

33. Abgasreinigungsvorrichtung für eine Brennkraftmaschine nach Anspruch 1, bei der ein Reduktionsmittel in den Abgaskanal (21) der Brennkraftmaschine eingeführt wird, um das Luft-Kraftstoff-Verhältnis des Abgases fett zu machen.

34. Abgasreinigungsvorrichtung für eine Brennkraftmaschine nach Anspruch 1, bei der die Brennkraftmaschine (1) eine Brennkraftmaschine ist, bei der die Menge an erzeugtem Ruß allmählich ansteigt und eine Spitze erreicht, wenn die Menge des rezirkulierten Abgases ansteigt, und nahezu keinen Ruß mehr erzeugt, wenn die Menge des rezirkulierten Abgases weiter erhöht wird, und bei der das Luft-Kraftstoff-Verhältnis des Abgases fett gemacht wird, indem das Luft-Kraftstoff-Verhältnis in der Verbrennungskammer (2) in einem Zustand fett gemacht wird, in dem die Menge des rezirkulierten Abgases über die Menge erhöht ist, bei der die Menge der Rußerzeugung den Spitzenwert erreicht.

35. Abgasreinigungsvorrichtung für eine Brennkraftmaschine nach Anspruch 1, bei der die Brennkraftmaschine (1) eine Brennkraftmaschine ist, bei der die Menge des erzeugten Rußes allmählich ansteigt und eine Spitze erreicht, wenn die Menge des rezirkulierten Abgases erhöht wird, und nahezu kein Ruß mehr erzeugt, wenn die Menge des rezirkulierten Abgases weiter erhöht wird, und bei der die Menge des rezirkulierten Abgases über die Menge, bei der die Menge der Rußerzeugung einen Spitzenwert erreicht, hinaus erhöht wird, wenn die Temperatur des Abgasreinigungskatalysators (11) erhöht werden sollte.

## Revendications

1. Dispositif de purification des gaz d'échappement pour un moteur à combustion interne (1) conçu pour purifier les NOx générés lors de la combustion du carburant sous un rapport air-carburant pauvre par un catalyseur de purification des gaz d'échappement (11) disposé dans un passage d'échappement (21), ledit catalyseur de purification des gaz d'échappement (11) comprenant un support catalytique (50) comportant des points de base montrant une basicité sur la surface du support, le support catalytique supportant de plus un catalyseur de métal précieux (51) dispersé sur la surface du support, dans lequel le dispositif de purification des gaz d'échappement comprend de plus une unité de commande électronique (30) destinée à commander un moyen (13) destiné à commuter temporairement le rapport air-carburant des gaz d'échappement entrant dans le catalyseur de purification des gaz d'échappement (11) de pauvre à riche avant que la surface entière du catalyseur de métal précieux (51) souffre d'un empoisonnement à l'oxygène,
**caractérisé en ce que**
aucune couche d'absorbant de NOx capable d'absorber les NOx n'est formée sur la surface du support.

2. Dispositif de purification des gaz d'échappement pour un moteur à combustion interne selon la revendication 1, dans lequel ledit support catalytique (50) est composé d'alumine.

3. Dispositif de purification des gaz d'échappement pour un moteur à combustion interne selon la revendication 2, dans lequel ledit support catalytique (50) est fabriqué pour contenir à l'intérieur de celui-ci un métal alcalin, un métal alcalinoterreux, un élément de terres rares (52) de façon à augmenter le nombre de points de base sur la surface de support catalytique pour renforcer la basicité au niveau des points de base.

4. Dispositif de purification des gaz d'échappement pour un moteur à combustion interne selon la revendication 1, dans lequel ledit catalyseur de métal précieux (51) est du platine.

5. Dispositif de purification des gaz d'échappement pour un moteur à combustion interne selon la revendication 1, dans lequel l'empoisonnement à l'oxygène du catalyseur de métal précieux (51) est éliminé de manière continue par le rapport air-carburant des gaz d'échappement étant commuté de manière répétée de pauvre à riche et dans lequel le rapport d'un temps riche par rapport à un temps pauvre à ce moment est établi au rapport donnant un taux de purification des NOx de 90 % ou plus lorsque la température (TC) du catalyseur de purification des gaz d'échappement (11) se situe entre 200 °C et 250 °C.

6. Dispositif de purification des gaz d'échappement pour un moteur à combustion interne selon la revendication 1, dans lequel l'empoisonnement à l'oxygène du catalyseur de métal précieux (51) est éliminé de manière continue par le rapport air-carburant des gaz d'échappement étant commuté de manière répétée de pauvre à riche et dans lequel l'action de commutation du rapport air-carburant de pauvre à riche est interdite lorsque la température (TC) du catalyseur de purification des gaz d'échappement (11) est une température admissible ou plus.

7. Dispositif de purification des gaz d'échappement pour un moteur à combustion interne selon la revendication 1, dans lequel ledit dispositif est de plus muni d'un moyen (30) destiné à calculer une quantité d'empoisonnement à l'oxygène (W) du catalyseur de métal précieux (51) et dans lequel le rapport air-carburant des gaz d'échappement est commuté de pauvre à riche lorsque la quantité calculée ou estimée d'empoisonnement à l'oxygène (W) dépasse une valeur admissible prédéterminée (WX).

8. Dispositif de purification des gaz d'échappement pour un moteur à combustion interne selon la revendication 7, dans lequel ledit dispositif est de plus muni d'un capteur de concentration en NOx (22) destiné à détecter la concentration en NOx dans les gaz d'échappement sortant du catalyseur de purification des gaz d'échappement (11) et dans lequel il est jugé que la quantité d'empoisonnement à l'oxygène (W) du catalyseur de métal précieux (51) a dépassé la valeur admissible (WX) lorsque la concentration en NOx détectée par le capteur de concentration en NOx (22) a dépassé une valeur établie (VX).

9. Dispositif de purification des gaz d'échappement pour un moteur à combustion interne selon la revendication 1, dans lequel ledit dispositif est de plus muni d'un moyen (30) destiné à juger si l'empoisonnement à l'oxygène du catalyseur de métal précieux (51) a été éliminé et dans lequel le rapport air-carburant des gaz d'échappement est commuté de riche à pauvre lorsqu'il est jugé que l'empoisonnement à l'oxygène du catalyseur de métal précieux (51) a été éliminé.

10. Dispositif de purification des gaz d'échappement pour un moteur à combustion interne selon la revendication 9, dans lequel ledit dispositif est de plus muni d'un capteur de rapport air-carburant (22) destiné à détecter un rapport air-carburant des gaz d'échappement sortant du catalyseur de purification des gaz d'échappement (11) et dans lequel il est jugé que l'empoisonnement à l'oxygène du catalyseur de métal précieux (51) a été éliminé lorsque le rapport air-carburant des gaz d'échappement sortant du catalyseur de purification des gaz d'échappement (11) devient riche après que le rapport air-carburant des gaz d'échappement entrant dans le catalyseur de purification des gaz d'échappement (51) ait été commuté de pauvre à riche.

11. Dispositif de purification des gaz d'échappement pour un moteur à combustion interne selon la revendication 1, dans lequel les NOx et les SOx contenus dans les gaz d'échappement sont oxydés par le catalyseur de métal précieux (51) dans le catalyseur de purification des gaz d'échappement (11), puis maintenus sur le support catalytique (50).

12. Dispositif de purification des gaz d'échappement pour un moteur à combustion interne selon la revendication 11, dans lequel les NOx maintenus sur le support catalytique (50) sont libérés du support catalytique (50) et réduits lorsque le rapport air-carburant des gaz d'échappement entrant dans le catalyseur de purification des gaz d'échappement (11) est temporairement commuté de pauvre à riche pour éliminer l'empoisonnement à l'oxygène du catalyseur de métal précieux (51).

13. Dispositif de purification des gaz d'échappement pour un moteur à combustion interne selon la revendication 11, dans lequel le renforcement de la basicité de la surface du support catalytique (50) est établi à un renforcement grâce auquel les SOx sont maintenus sur la surface du support catalytique (50) sous la forme d'ions de sulfate.

14. Dispositif de purification des gaz d'échappement pour un moteur à combustion interne selon la revendication 13, dans lequel lorsque les SOx maintenus sur la surface du support catalytique (50) sont libérés de la surface du support catalytique (50), la température (TC) du catalyseur de purification des gaz d'échappement (11) est amenée à s'élever à la température de libération des SOx (TX), puis le rapport air-carburant des gaz d'échappement est rendu riche alors que la température (TC) du catalyseur de purification des gaz d'échappement (11) est maintenue à la température de libération des SOx (TX), et la température de libération des SOx (TX) est d'environ 550° C à 550° C.

15. Dispositif de purification des gaz d'échappement pour un moteur à combustion interne selon la revendication 1, dans lequel un filtre particulaire (11) est disposé dans le passage d'échappement du moteur à la place dudit catalyseur de purification des gaz d'échappement (11) et le support catalytique est revêtu sur le filtre particulaire (64).

16. Dispositif de purification des gaz d'échappement pour un moteur à combustion interne selon la revendication 1, dans lequel un filtre particulaire (11) est disposé dans le passage d'échappement du moteur (21) et ledit catalyseur de purification des gaz d'échappement (11) est disposé dans le passage d'échappement (21) en amont ou en aval du filtre particulaire (11).

17. Dispositif de purification des gaz d'échappement pour un moteur à combustion interne selon la revendication 1, dans lequel le passage d'échappement du moteur (21) comporte disposé dans celui-ci un catalyseur du type à réduction sélective de NOx (23) possédant la fonction de réduction sélective des NOx et ne possédant pas la fonction d'absorption des NOx et dans lequel ledit catalyseur de purification des gaz d'échappement (11) est disposé dans le passage d'échappement (21) en amont ou en aval dudit catalyseur du type à réduction sélective des NOx (23).

18. Dispositif de purification des gaz d'échappement pour un moteur à combustion interne selon la revendication 17, dans lequel le catalyseur de purification des gaz d'échappement (11) est disposé dans le passage d'échappement (21) en amont du catalyseur du type à réduction sélective des NOx (23), une soupape d'alimentation en urée (25) destinée à délivrer une solution d'urée aqueuse est prévue dans le passage d'échappement (21) entre le catalyseur du type à réduction sélective des NOx (23) et le catalyseur de purification des gaz d'échappement (11), le rapport air-carburant des gaz d'échappement est commuté de manière répétée de pauvre à riche lorsqu'un taux de purification de NOx élevé est obtenu par le catalyseur de purification des gaz d'échappement (11), et la solution d'urée aqueuse est délivrée depuis la soupape d'alimentation en urée (25) lorsqu'un taux de purification de NOx élevé est obtenu par le catalyseur du type à réduction sélective des NOx (23).

19. Dispositif de purification des gaz d'échappement pour un moteur à combustion interne selon la revendication 1, dans lequel un catalyseur de stockage de NOx (29), formant sur la surface du support (45) une couche d'absorbant de NOx (47) capable d'absorber les NOx sous un rapport air-carburant pauvre et supportant un catalyseur de métal précieux (46) dispersé sur celui-ci, est disposé dans le passage d'échappement du moteur (43) en série avec ledit catalyseur de purification des gaz d'échappement (11), le rapport air-carburant des gaz d'échappement entrant dans le catalyseur de purification des gaz d'échappement (11) est temporairement commuté de pauvre à riche avant que la surface entière du catalyseur de métal précieux (51) supporté sur la surface de support du catalyseur de purification des gaz d'échappement (11) ne souffre d'un empoisonnement à l'oxygène lorsque les NOx dans les gaz d'échappement sont principalement purifiés par le catalyseur de purification des gaz d'échappement (11), et le rapport air-carburant des gaz d'échappement entrant dans le catalyseur de stockage de NOx (29) est temporairement commuté de pauvre à riche avant que la capacité de stockage de NOx du catalyseur de stockage de NOx (29) devienne saturée lorsque les NOx dans les gaz d'échappement sont principalement purifiés par le catalyseur de stockage de NOx (29).

20. Dispositif de purification des gaz d'échappement pour un moteur à combustion interne selon la revendication 19, dans lequel les NOx dans les gaz d'échappement sont principalement purifiés par le catalyseur de purification des gaz d'échappement (11) lorsqu'une température du catalyseur de purification des gaz d'échappement (TC) se trouve dans une première région de températures, et les NOx dans les gaz d'échappement sont principalement purifiés par le catalyseur de stockage de NOx (29) lorsqu'une température du catalyseur de stockage de NOx se trouve dans une deuxième région de températures au niveau d'un côté plus élevé que ladite première région de températures.

21. Dispositif de purification des gaz d'échappement pour un moteur à combustion interne selon la revendication 20, dans lequel il est jugé que la température du catalyseur de purification des gaz d'échappement (11) se trouve dans la première plage de températures lorsqu'une température représentative (TC) représentant la température du catalyseur de purification des gaz d'échappement (11) et la température du catalyseur de stockage de NOx (29) est inférieure à une température établie prédéterminée (TS), il est jugé que la température du catalyseur de stockage de NOx (29) se trouve dans la deuxième plage de températures lorsque ladite température représentative (TC) est supérieure à la température établie prédéterminée (TS), le rapport air-carburant des gaz d'échappement entrant dans le catalyseur de purification des gaz d'échappement (11) est temporairement commuté de pauvre à riche avant que la surface entière du catalyseur de métal précieux (51) supporté sur la surface du support du catalyseur de purification des gaz d'échappement (11) ne souffre d'un empoisonnement à l'oxygène lorsqu'il est jugé que la température du catalyseur de purification des gaz d'échappement (29) se trouve dans la première région de températures, et le rapport air-carburant des gaz d'échappement entrant dans le catalyseur de stockage de NOx est temporairement commuté de pauvre à riche avant que la capacité de stockage des NOx du catalyseur de stockage de NOx (29) devienne saturée lorsqu'il est jugé que la température du catalyseur de stockage de NOx (29) se trouve dans la deuxième région de températures.

22. Dispositif de purification des gaz d'échappement pour un moteur à combustion interne selon la revendication 21, dans lequel l'absorbant de NOx (47) supporté sur la surface du support (45) du catalyseur de stockage de NOx (29) est composé d'un métal alcalin, d'un métal alcalinoterreux ou d'un élément de terres rares.

23. Dispositif de purification des gaz d'échappement pour un moteur à combustion interne selon la revendication 19, dans lequel les NOx et les SOx contenus dans les gaz d'échappement sont absorbés dans l'absorbant de NOx (47) supporté sur la surface du support (45) du catalyseur de stockage de NOx (29) sous un rapport air-carburant pauvre.

24. Dispositif de purification des gaz d'échappement pour un moteur à combustion interne selon la revendication 23, dans lequel le dispositif est muni d'un moyen (30) destiné à calculer une quantité (NOXA) de NOx absorbés dans l'absorbant de NOx (47) et dans lequel le rapport air-carburant des gaz d'échappement est commuté de pauvre à riche lorsque la quantité calculée ou estimée (NOXA) de NOx absorbés dépasse une valeur admissible prédéterminée (NX).

25. Dispositif de purification des gaz d'échappement pour un moteur à combustion interne selon la revendication 23, dans lequel ledit dispositif est de plus muni d'un capteur de concentration en NOx (22) destiné à détecter la concentration en NOx dans les gaz d'échappement sortant du catalyseur de stockage de NOx (29) et dans lequel il est jugé que la quantité de NOx (NOXA) absorbés de l'absorbant de NOx (47) a dépassé la valeur admissible lorsque la concentration en NOx détectée par le capteur de concentration en NOx (22) a dépassé une valeur établie (NX).

26. Dispositif de purification des gaz d'échappement pour un moteur à combustion interne selon la revendication 23, dans lequel lorsque les SOx absorbés dans l'absorbant de NOx (47) du catalyseur de stockage de NOx (29) sont libérés de l'absorbant de NOx, la température du catalyseur de stockage de NOx (29) est amenée à s'élever à la température de libération des SOx, puis le rapport air-carburant des gaz d'échappement est rendu riche alors que la température du catalyseur de stockage de NOx (29) est maintenue à la température de libération des SOx (TX1), et la température de libération des SOx (TX1) est d'environ 600 °C ou plus.

27. Dispositif de purification des gaz d'échappement pour un moteur à combustion interne selon la revendication 19, dans lequel l'ordre de disposition du catalyseur de purification des gaz d'échappement (11) et du catalyseur de stockage de NOx (29) est déterminé conformément à la force de la basicité du catalyseur (11, 29) et le catalyseur (11, 29) présentant une basicité plus forte est disposé en amont dudit catalyseur (11, 29) présentant une basicité plus faible.

28. Dispositif de purification des gaz d'échappement pour un moteur à combustion interne selon la revendication 19 ou 27, dans lequel le catalyseur de stockage de NOx (29) est disposé au niveau du côté en amont du catalyseur de purification des gaz d'échappement (11).

29. Dispositif de purification des gaz d'échappement pour un moteur à combustion interne selon la revendication 28, dans lequel un catalyseur acide (70) est disposé au niveau d'un côté en amont du catalyseur de stockage de NOx (29).

30. Dispositif de purification des gaz d'échappement pour un moteur à combustion interne selon la revendication 19, dans lequel le catalyseur de stockage de NOx (29) est disposé en aval du catalyseur de purification des gaz d'échappement (11).

31. Dispositif de purification des gaz d'échappement pour un moteur à combustion interne selon la revendication 19, dans lequel les catalyseurs de purification des gaz d'échappement (11) sont disposés en amont et en aval du catalyseur de stockage de NOx (29).

32. Dispositif de purification des gaz d'échappement pour un moteur à combustion interne selon la revendication 28, 30 ou 31, dans lequel le catalyseur de stockage de NOx (29) est composé d'un filtre particulaire.

33. Dispositif de purification des gaz d'échappement pour un moteur à combustion interne selon la revendication 1, dans lequel un agent de réduction est délivré dans le passage d'échappement du moteur (21) pour rendre le rapport air-carburant des gaz d'échappement riche.

34. Dispositif de purification des gaz d'échappement pour un moteur à combustion interne selon la revendication 1, dans lequel le moteur (1) est un moteur qui augmente progressivement la quantité de génération de suie et atteint une crête lors de l'augmentation de la quantité de recirculation des gaz d'échappement et ne génère pratiquement plus aucune suie lors d'une augmentation supplémentaire de la quantité de recirculation des gaz d'échappement et dans lequel le rapport air-carburant des gaz d'échappement est rendu riche en rendant le rapport air-carburant dans la chambre de combustion (2) riche dans l'état dans lequel la quantité de recirculation des gaz d'échappement est augmentée au-delà de la quantité à laquelle la quantité de génération de suie atteint un sommet.

35. Dispositif de purification des gaz d'échappement pour un moteur à combustion interne selon la revendication 1, dans lequel le moteur (1) est un moteur qui augmente progressivement la quantité de génération de suie et atteint un sommet lors de l'augmentation de la quantité de recirculation des gaz d'échappement et ne génère pratiquement plus aucune suie lors de l'augmentation supplémentaire de la quantité de recirculation des gaz d'échappement et dans lequel la quantité de recirculation des gaz d'échappement est augmentée au-delà de la quantité à laquelle la quantité de génération de suie atteint un sommet lorsque la température du catalyseur de purification des gaz d'échappement (11) doit être élevée.
